(19) **Europäisches Patentamt**
**European Patent Office**
**Office européen des brevets**

(11) **EP 2 808 640 B1**

(12) **EUROPEAN PATENT SPECIFICATION**

(45) Date of publication and mention of the grant of the patent:
**26.10.2016 Bulletin 2016/43**

(51) Int Cl.:
***F28D 20/00*** *(2006.01)*

(21) Application number: **14169366.3**

(22) Date of filing: **21.05.2014**

(54) **Energy storage**

Energiespeicherung

Stockage d'énergie

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.05.2013 GB 201309141**

(43) Date of publication of application:
**03.12.2014 Bulletin 2014/49**

(73) Proprietor: **European Thermodynamics Limited Kibworth, Leicester LE8 0RX (GB)**

(72) Inventor: **Riffat, Saffa Nottingham, Nottinghamshire NG7 2RD (GB)**

(74) Representative: **Braddon, Nicholas Barker Brettell LLP 100 Hagley Road Edgbaston Birmingham B16 8QQ (GB)**

(56) References cited:
WO-A1-96/30706　　　WO-A1-2007/139476
GB-A- 2 088 548　　　JP-A- S58 182 087
JP-A- S61 134 594　　　US-A- 4 510 759
US-A1- 2011 146 939

• **N'TSOUKPOE K E ET AL: "A review on long-term sorption solar energy storage", RENEWABLE AND SUSTAINABLE ENERGY REVIEWS, ELSEVIERS SCIENCE, NEW YORK, NY, US, vol. 13, no. 9, 1 December 2009 (2009-12-01), pages 2385-2396, XP026495339, ISSN: 1364-0321, DOI: 10.1016/J.RSER.2009.05.008 [retrieved on 2009-06-30]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 808 640 B1

**Description**

The present invention relates to energy storage, more particularly thermochemical energy storage.

The use of energy storage technology can increase the operational efficiency of small- and/or large-scale heat and electrical energy generation systems, e.g. by reducing equipment short cycling and in particular by bridging the period between times when energy is harvested and periods when it is needed. As a result, the supply and demand of energy may become better balanced, whether at a national or regional scale or at a local scale.

The continual increase in energy demand for space heating and hot water in the domestic and commercial building sector in addition to rising gas and electrical prices has led to an increase in interest in local or on-site heat and electrical energy generation. Micro-generation schemes have been recently developed in order to generate adequate electricity and heat from local or on-site energy sources. Such local or on-site energy sources may comprise renewable sources, e.g. photovoltaic panels, solar collectors, air or ground source heat pumps or one or more, typically small-scale, wind turbines.

On the plus side, renewable sources can be environmentally friendly, particularly with regard to emissions. At present, less than 1% of the UK's 25 million homes are equipped with micro-generation technology using renewable sources. Hence, domestic micro-generation using renewable energy sources could make a significant contribution to a reduction in $CO_2$ emissions.

However, many renewable energy sources are intermittent. Accordingly, large-scale adoption of domestic or commercial micro-generation may require efficient utilisation and integration of an irregular differentiated energy supply and, from an economic perspective, a reduction of capital costs to reduce payback periods.

Energy, e.g. heat, storage is required to harmonize energy production and consumption processes. Conventional thermal storage typically may utilize water or phase change material (PCM). These systems, whilst simple, typically have low storage densities, large system volumes and high heat losses, which may rule them out as acceptable options for large-scale or widespread application.

US 7,871,458 relates to a heating system for a building comprising; i) a heater; ii) a media flow passage through which a medium heated by the heater passes in order to distribute heat through the building; and iii) a heat recovery apparatus for recovering latent heat of adsorption from a humid gas. The heat recovery apparatus comprises a) a gas flow passage connected at one end to a source of humid gas; b) a desiccant material provided within the gas flow passage such that the humid gas contacts the desiccant material and water vapour is adsorbed releasing latent heat of adsorption; wherein the media flow passage and gas flow passage are in heat exchanging relationship, such that when the desiccant material adsorbs water vapour from the exhaust gas the latent heat of the adsorption is at least partially transmitted to the medium.

Document US-A-4510759 represents a thermochemical energy storage system according to the preamble of claim 1.

There is a need for an improved energy storage system, which may ameliorate or mitigate at least some of the problems associated with known energy storage technologies and which may be suitable for widespread application in domestic and/or commercial properties.

A first aspect of the invention provides a thermochemical energy storage system operable to store energy for future use comprising:

> an energy storage unit comprising at least one adsorption heat pipe having an operating temperature of no more than 80°C, the adsorption heat pipe comprising a reactor section comprising an adsorbent containing a thermochemical material and a condenser/evaporator refrigerant section, the adsorption heat pipe containing a working fluid selected to match the operating temperature of the adsorption heat pipe;
>
> a heat pump coupled to a heat source and operable to transfer heat from the heat source to the energy storage unit; wherein, in use, the heat pump is operated periodically using a high grade energy source for one or more charging periods, whereby heat is transferred during the one or more charging periods to the energy storage unit, where the heat is stored for future use by being absorbed in the course of desorption of the working fluid from the adsorbent.

In an embodiment, the thermochemical material may comprise lithium nitrate ($LiNO_3$). Additionally or alternatively, the adsorbent may contain calcium chloride ($CaCl_2$), calcium hydroxide ($Ca(OH)_2$), calcium nitrate ($Ca(NO_3)_2$), silica gel, vermiculite or a zeolite.

The adsorbent may comprise a composite adsorbent, e.g. a nano-composite adsorbent, containing the thermochemical material.

The composite adsorbent may comprise a host matrix.

The host matrix may be porous. The host matrix may be nanoporous, microporous or mesoporous.

The host matrix may comprise silica and/or vermiculite.

In an embodiment, the thermochemical material may comprise calcium chloride and vermiculite or calcium chloride and silica gel.

In an embodiment, the adsorbent may be provided in an adsorbent bed.

In an embodiment, the thermochemical material may be provided in an adsorbent stack comprising a plurality of layers of adsorbent separated by layers of non-adsorbent material.

In an embodiment, the thermochemical material may be provided in a discrete module or cartridge. For instance, the cartridge may comprise an adsorbent stack.

In an embodiment, one or more vapour flow channels in the reactor section may pass through or adjacent the adsorbent. The one or more vapour flow channels may be defined at least partially by a permeable or perforated wall or membrane, e.g. a mesh. By providing vapour flow channels through or adjacent the adsorbent, vapour flow, in use, into and out of the adsorbent may be facilitated.

In an embodiment, the working fluid may be water, ammonia or an alcohol such as methanol or ethanol.

In an embodiment, the condenser/evaporator refrigerant section may contain a wick.

In an embodiment, the operating temperature may be no more than 70°C, no more than 60°C or no more than 50°C. The operating temperature may be more than 0°C.

Heat exchange fins may be provided on an outer surface of the or each adsorption heat pipe.

Typically, the or each adsorption heat pipe may have the form of a sealed, at least partially evacuated tube.

The or each adsorption heat pipe may comprise a permeable separator located between the reactor section and the condenser/evaporator refrigerant section.

The or each adsorption heat pipe may be substantially straight and/or may be curved or comprise at least one curved portion.

The energy storage unit may comprise any number of adsorption heat pipes.

The high grade energy source may comprise off-peak electricity and/or electricity generated from a renewable source such as wind or solar. The renewable source may be intermittent.

The or each charging period may be predetermined, e.g. in accordance with a program, which optionally may be selected by a user. At least one charging period may correspond with off-peak, thereby typically cheaper, electricity supply. Typically, the or each charging period may be at night. The or each charging period may last for up to several hours.

Typically, energy stored in the system may be subsequently used to provide energy for a domestic or commercial property. Conveniently, the energy may be used to provide space heating and/or hot water.

The stored energy may be released during one or more discharging periods.

The or each discharging period may be predetermined, e.g. in accordance with a program, which optionally may be selected by a user. At least one discharging period may correspond with peak-time, thereby typically more expensive, electricity or gas supply. Typically, the or each discharging period may be during the day. The or each discharging period may last for up to several hours.

The heat source may be a low temperature heat source, e.g. the ground or ambient air. The heat pump may comprise a ground source or air source heat pump.

In an embodiment, the heat pump may comprise a thermoelectric heat pump.

In an embodiment, the heat pump may comprise a vapour compression heat pump.

For example, the heat pump may comprise a circuit around which a refrigerant is driven, in use, the circuit comprising a compressor, a condenser, an expansion valve and an evaporator,

wherein, in use, the compressor is powered periodically by the high grade energy source to drive the refrigerant around the circuit for the one or more charging periods of time and heat is transferred during the charging period(s) from the compressor to the energy storage unit via a heat transfer fluid loop, where it is stored for future use by being absorbed in the course of desorption of the working fluid from the adsorbent, e.g. a composite adsorbent.

The system may comprise a second heat transfer fluid loop configured to return heat during the charging period(s) back to the evaporator.

The system may be installed at a property, e.g. a domestic or commercial property. The system may be installed inside a building.

In an embodiment, the system may provide space heating and/or hot water to the property.

The thermochemical system may be tuned or calibrated for a particular property or building or a particular type of property or building.

The thermochemical energy storage system may be tunable at least partially to a particular building or type of building, e.g. based on one or more of the shape and size of the building and the rooms within it, the level of insulation of the building, the climate at the building's location and typical occupancy levels and patterns. Accordingly, the thermochemical energy storage system may be operable in accordance with a predetermined program specific to a given building or building type. Operation of the thermochemical energy storage system may be controlled using fuzzy logic.

In an embodiment, the system may be mounted on wheels or casters.

A second aspect of the invention provides a property with at least one building on the property, wherein a thermochemical energy strorage system according to the first aspect of the invention is installed at the property.

A third aspect of the invention provides use of a system according to the first aspect of the invention to store energy during one or more charging periods and, optionally, subsequently release the stored energy during one or more discharging periods.

An example of an electrochemical energy storage system of the invention may be termed a thermochemical energy storage pumping pipe (TESPP). Typically, the TESPP may be based on the application of an adsorption heat pipe, which may use a range of adsorbent materials including nano-composite adsorbent materials (e.g., $LiNO_3$/silica or $LiNO_3$/vermiculite) and water can be used as the working media.

The energy storage system of the invention is based on performing a reversible reaction, which allows absorption of heat in the course of decomposition (desorption) that is endothermic. A reverse reaction is exothermic and results in releasing stored heat. Advantages of adsorption thermal storage include a high energy density up to 2MJ/kg, long-term storage as reactants with small thermal loss, possibility of upgrading temperature potential of the released heat and wide temperature range/characteristics. For instance, the materials $LiNO_3$/silica and $LiNO_3$/vermiculite can exchange 0.4-0.5g $H_2O$ per 1g of adsorbent at an evaporator temperature of 7-12°C, a condenser temperature of 25-33°C, a regeneration temperature of 65-70°C, with a storage density of approx. 0.8-1.2MJ/kg of dry material. This storage density is superior to other materials used in this temperature range. For example, water has a storage density of 0.209MJ/kg for a temperature change of 50°C. Advantageously, the composite adsorbent may be relatively simple to prepare, inexpensive to manufacture and may be scaled up.

Advantageously, the invention may provide a platform for energy storage and environmental control on top of which renewable energy sources can be added, thereby using energy sources at increased efficiency and a simple upgrading route for new sources. For instance, a high-performance Thermochemical Energy Storage Pumping Pipe (TESPP) using off-peak power and/or renewable sources may help to minimise energy demands from fossil fuels.

The invention may provide an energy storage system operable to store energy for future use, e.g. a high-performance Thermochemical Energy Storage Pumping Pipe (TESPP) system, which may advantageously use off-peak power and/or renewable sources to reduce or minimise energy demands from fossil fuels.

The energy storage system is based on the application of an adsorption heat pipe. Typically, the adsorption heat pipe may incorporate a reactor section (containing an adsorbent bed) and a condenser/evaporator refrigerant section. Advantageously, this configuration may improve heat transfer and enhance the overall performance of the energy storage system.

The advanced material development underpinning this invention may help to improve the viability of thermal storage technology by delivering cost effective, compact thermal stores. For instance, these nano-composite materials may be able to exchange a large amount of water (0.4~0.5 g $H_2O$/g) and may have a remarkable heat storage capacity of about 1.15MJ/kg compared with 0.209MJ/kg for water when the temperature change is 50C.

In this patent application, the condenser/evaporator refrigerant section may also be termed an evaporation section. The reactor section may also be termed an adsorption section.

In order that the invention may be well understood, it will now be described by way of example only with reference to the accompanying drawings, in which:

Figure 1 illustrates the scheme of water interaction with a composite adsorbent material.

Figure 2 is a plot of energy density versus turnover temperature for different energy storage materials.

Figure 3 is a schematic diagram of a metal and glass vessel laboratory test rig.

Figure 4 is a photograph of a metal and glass vessel laboratory test rig.

Figure 5 is a graph showing the variation of temperature of evaporation section (water) and adsorption section (lithium nitrate adsorbent) in a metal and glass vessel laboratory test rig.

Figure 6 is a schematic diagram of a glass tube laboratory test rig.

Figure 7 is a photograph of a glass tube laboratory test rig.

Figure 8 is a graph showing the variation of temperature of evaporation section (water) and adsorption section (silica gel adsorbent) in a glass tube laboratory test rig.

Figure 9 is a graph showing the variation of temperature of evaporation section (water) and adsorption section (zeolite adsorbent) in a glass tube laboratory test rig.

Figure 10 is a graph showing the variation of temperature of evaporation section (water) and adsorption section (lithium nitrate adsorbent) in a glass tube laboratory test rig.

Figure 11 is a graph showing the variation of temperature of evaporation section (water) and adsorption section (50% lithium nitrate, 50% zeolite adsorbent).

Figure 12 is a graph showing the variation of temperature of heat transfer fluid and adsorbent bed comprising lithium nitrate and silica as a function of time.

Figure 13 is a first graph showing variations in thermal capacity versus mass flow rate for a thermochemical energy storage system according to the invention.

Figure 14 is a second graph showing variations in thermal capacity versus mass flow rate for a thermochemical energy storage system according to the invention.

Figure 15 illustrates the working principle of an adsorption heat pipe for thermal storage.

Figure 16 is a schematic illustration of an energy storage unit according to the invention containing four heat pipes.

Figure 17 illustrates an example of a thermochemical energy storage system according to the invention.

Figure 18 illustrates a thermal storage system according to the invention, in which an adsorption heat pipe is integrated with a thermoelectric heat pump.

Figure 19 shows schematically a thermochemical energy storage pumping pipe (TESPP) computer simulation model unit.

Figure 20 is a first graph of energy capacity versus heat source temperature for a TESPP system according to the invention being operated at three chilled water mass flow rates.

Figure 21 is a second graph of energy capacity versus heat source temperature for a TESPP system according to the invention being operated at three chilled water mass flow rates.

Figure 22 shows the variations of energy capacity of a TESPP system versus chilled water inlet temperature.

Figure 23 shows a plurality of houses of varying sizes and a small commercial building, which could each be fitted with a thermochemical energy storage system according to the invention.

Figure 24 shows a comparison of simulated average water temperature with experimental water temperature for zeolite and water

Figure 25 shows an example embodiment of an adsorption heat pipe which does not form part of this invention.

Figure 26 shows an example embodiment of an adsorption heat pipe which does not form part of this invention.

Figure 27 shows another example embodiment of a thermochemical energy storage system according to the invention.

Figure 28 shows another example embodiment of a thermochemical energy storage system according to the invention.

Figure 29 shows a portion of a cartridge comprised within the thermochemical energy storage system shown in Figure 28.

Figure 30 shows another example embodiment of a thermochemical energy storage system according to the invention.

Figure 31 shows another example embodiment of a thermochemical energy storage system according to the invention.

Figures 32 and 33 show another example embodiment of a thermochemical energy storage system according to the invention.

Figures 34 and 35 show another example embodiment of a thermochemical energy storage system according to the invention.

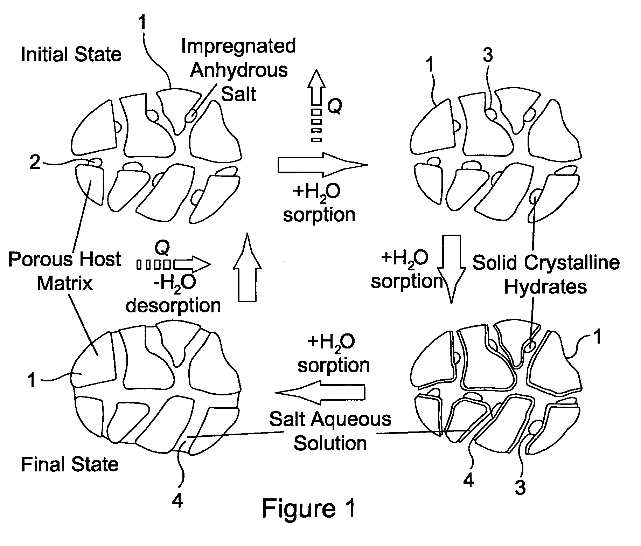

Figure 1 illustrates the scheme of water interaction with a two-component (composite) sorbent.

The top left image in Figure 1 shows an initial state, in which no or very little water is adsorbed. A porous host matrix 1 has therein many agglomerates of an impregnated anhydrous salt 2.

Heat Q is released as water is adsorbed. The top right image in Figure 1 illustrates a first stage of water sorption. Solid crystalline hydrates 3 form within the porous matrix 1.

As more water is adsorbed, as illustrated in the bottom right image in Figure 1, the porous matrix 1 begins to fill with a salt aqueous solution 4 in addition to solid crystalline hydrates 3.

The bottom left image in Figure 1 shows a final state, in which as much water as possible has been adsorbed. The porous matrix 1 is substantially filled with salt aqueous solution 4.

Heat Q is absorbed as the water is desorbed. After all of the water has been desorbed, the sorbent will have returned to its initial state. The process illustrated in Figure 1 can be repeated any number of times.

The main mechanisms of water sorption that take place on a composite sorbent comprising a "salt inside a porous host matrix", e.g. as illustrated in Figure 1, are: (a) solid absorption (or a chemical reaction), which is responsible for about 10-15% of the total sorption, and (b) liquid absorption (about 80%). In addition, heterogeneous adsorption on the matrix surface is responsible for 3-4% and sometimes can be neglected.

## Adsorbent screening and selection

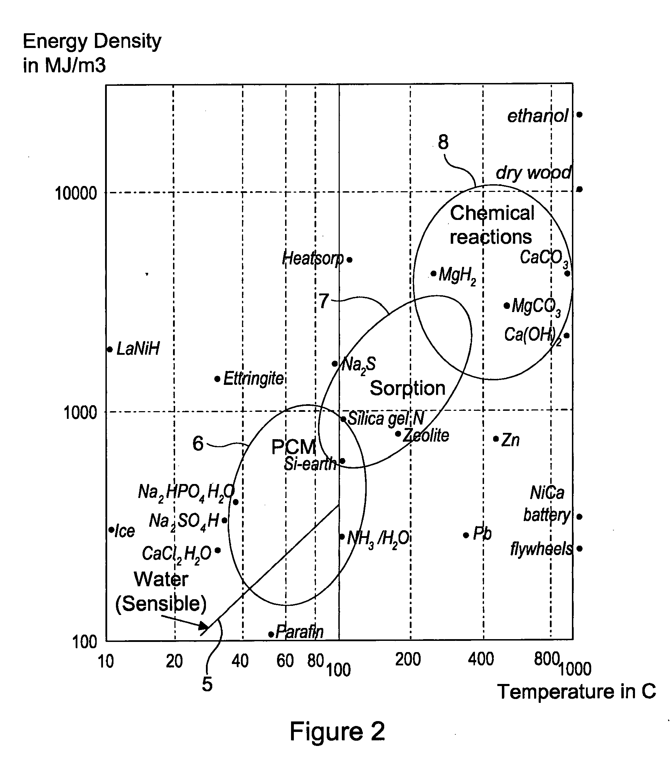

Thermochemical materials (TCMs) are a promising new alternative for long term heat storage. The process concerned is based on a reversible chemical reaction, which is energy demanding in one direction and energy yielding in the reverse direction. A review of the thermochemical energy storage material has been presented (Y. Ding, S. B. Riffat, 2012, Thermochemical energy storage technologies for building applications: a state-of-the-art review, Int. J. Low-Carbon Tech. (2012), doi: 10.1093/ijlct/cts004). Normally, thermochemical materials have the higher storage density with repetitive storage properties to use in sorption storage systems and some materials may even offer storage density close to properties of biomass (R. Hastings, M. Wall, 2007, IEA Energy Conservation in Buildings & Community Systems Programme, editors. Sustainable solar housing: exemplary buildings and technologies. Earthscan). Because of higher energy density, thermochemical thermal energy storage systems can provide more compact energy storage relative to latent and sensible thermal energy storage (K.E. N'Tsoukpoe et al., 2009, A review on long-term sorption solar energy storage, Renewable and Sustainable Energy Reviews 13, 2385-2396; C. Bales, 2006, Solar Energy Research Center (SERC). Chemical and sorption heat storage. In: Proceedings of DANVAK seminar (solar heating systems - Combisystems - heat storage; and J.C. Hadorn, 2005, Thermal energy storage for solar and low energy buildings - state of the art. Lleida, Spain: Servei de Publicacions de la Universitat de Lleida), e.g. as shown in Figure 2.

Figure 2 shows energy density in $MJ/m^3$ versus temperature in °C for many different energy storage materials. Water, a sensible thermal storage material, is illustrated by a line 5. Phase change materials (PCM) are typically located within a first ring 6. Sorption thermal energy storage materials are typically located within a second ring 7 and thermal energy storage materials which rely on chemical reactions are typically located within a third ring 8. While there is a small amount of overlap between the three rings 6, 7 and 8, the third ring 8 is generally at higher energy densities and temperatures than the second ring 7, which is generally at higher energy densities and temperatures than the first ring 6.

Nowadays, there are a number of materials and reactions that conform to thermochemical energy storage systems. Some promising thermochemical storage material candidates that have been recently identified are listed in Table 1 below. Table 1 also provides the values of energy storage density and reaction temperature, which are two important factors for material selections. In 2009, Kato investigated medium temperature chemical heat storage materials with metal hydroxides (Kato Yukitaka et al, 2009, Study on medium-temperature chemical heat storage using mixed hydroxides, International Journal of Refrigeration, 32(4), 661-666). The results showed that mixed hydroxides can chemically store medium temperature heat such as waste heats emitted from internal combustion engines, solar energy system and high temperature system. Visscher (Visscher, K. et al, 2004, Compacte chemische seizoensopslag van zonnewarmte, ECN-C-04-074) revealed that the group of salt-hydrates in general are considered to be suitable thermochemical materials. For example, magnesium sulfate hepta-hydrate ($MgSO_4$ $7H_2O$) is particularly suitable for use as a thermochemical material. It is essential that salt-hydrates can incorporate large amounts of water into the crystal lattice. When a hydrated salt is heated, the crystal water is driven off. In a long term seasonal storage system, solar heat can be employed to dehydrate the salt-hydrate in summer. Subsequently the anhydrous salt is stored until needed. In winter, this salt experiences reverse reaction and yields energy in the form of heat, which can be used for building applications such as hot tap water and central heating. Magnesium sulfate heptahydrate ($MgSO_4 \cdot 7H_2O$), commonly known as epsom salt, can be used for such energy storage applications. Recently, van Essen (Essen van V. M. et al, 2009, Characterisation of MgSO4 hydrate for thermochemical seasonal heat storage, J. Solar Energy Eng.-Trans. ASME 131(4).041014) and Posern and Kaps (Posern, K., Kaps C., 2008, Humidity controlled calorimetric investigation of the hydration of MgSO4 hydrates, J. Therm. Anal. Calorim. 92 (3) (2008) 905-909) have assessed the capability of $MgSO_4 \cdot 7H_2O$ as an ideal material for thermochemical energy storage. The results were similar to Stach's findings using experimental measurements (H. Stach et al, 2005, Influence of cycle temperatures on the thermochemical heat storage densities in the systems water/microporous and water/mesoporous adsorbents, Adsorp.-J. Int. Adsorp. Soc. 11 (3-4) 393-404). In 2010, Balasubramanian et al (Balasubramanian Ganesh, et al, 2010, Modeling of thermochemical energy storage by salt hydrates, International Journal of Heat and Mass Transfer 53 (2010) 5700-5706) investigated the capability of $MgSO_4 \cdot 7H_2O$ to store thermochemical energy via a mathematical model. This simulated method can help identify optimal materials for thermochemical storage within practical constraints. Abedin (Abedin A.H., Rosen M.A., 2011, Assessment of a closed thermochemical energy storage using energy and exergy methods, Applied Energy, doi: 10.1016/j.apenergy.2011.05.041) investigated a closed thermochemical energy storage using bromide strontium ($SrBr \cdot 6H_2O$) as the reactant and water as the working fluid. In 2006, Lahmidi simulated a sorption process based on the use of bromide strontium ($SrBr \cdot 6H_2O$), which is adapted to solar thermal systems (H. Lahmidi et al., 2006, Definition, test and simulation of a thermochemical storage process adapted to solar thermal systems, Solar Energy 80, 883-893).

**Table 1**

| Materials | Dissociation reaction | | | Energy storage density of C ($GJ/m^3$) | Turnover Temperature (°C) |
|---|---|---|---|---|---|
| | C | A | B | | |
| Magnesium Sulphate | $MgSO_4 \cdot 7H_2O$ | $MgSO_4$ | $H_2O$ | 2.8 | 122 |
| Silicon Oxide | $SiO_2$ | Si | $O_2$ | 37.9 | 4065 |
| Iron Carbonate | $FeCO_3$ | FeO | $CO_2$ | 2.6 | 180 |
| Iron Hydroxide | $Fe(OH)_2$ | FeO | $H_2O$ | 2.2 | 150 |
| Calcium Sulphate | $CaSO_4 \cdot 2H_2O$ | $CaSO_4$ | $H_2O$ | 1.4 | 89 |
| Sodium Sulphide | $Na_2S \cdot 5H_2O$ | $Na_2S$ | $H_2O$ | 2.8 | 110 |
| Bromide Strontium | $SrBr_2 \cdot 6H_2O$ | $SrBr_2 \cdot H_2O$ | $H_2O$ | 0.22 | 43 |
| Calcium Hydroxide | $Ca(OH)_2$ | CaO | $H_2O$ | 2.2 | 25 |

We have found that nano-composite adsorbent materials based on $LiNO_3$ may be suitable for use in the present invention, as they are able to exchange a large amount of water (0.4~0.5 g $H_2O$/g) and have a remarkable heat storage capacity of about 1.15MJ/kg compared with 0.209MJ/kg for water when the temperature change is 50°C.

## Design, construction and laboratory test rig

A glass tube test rig was used to measure (and observe) thermochemical performance for a small sample of adsorbent material, and a metal glass vessel test rig was constructed to measure the reaction of large samples of adsorbent materials.

### Laboratory test rig - metal & glass vessel

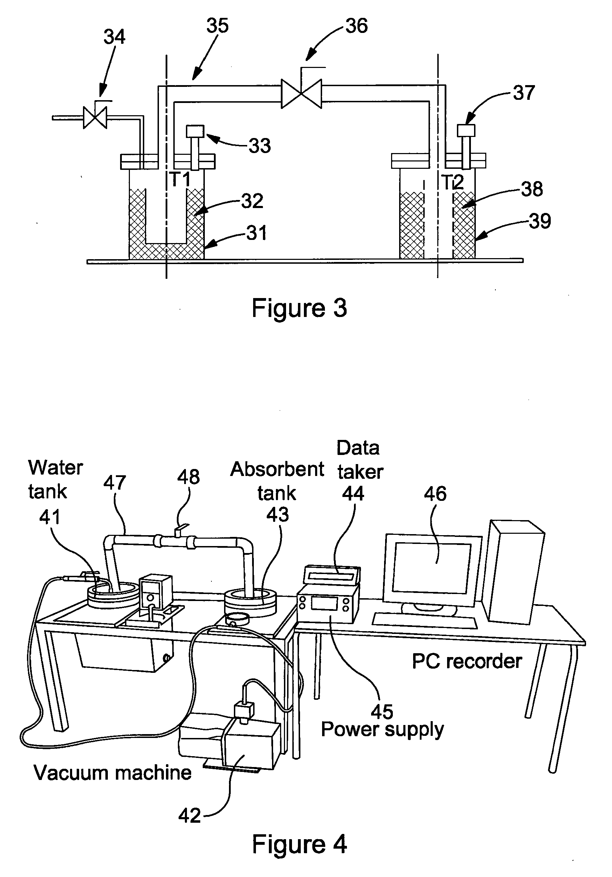

Figure 3 is a schematic diagram of a metal and glass vessel laboratory test rig.
The test rig comprises a water vessel 31. Inside the water vessel 31 there is a wick 32 complete with water. The water vessel 31 is sealed and evacuated. A line to a vacuum pump (not shown) extends out of the water vessel 31. The line is provided with a ball valve 34. A pressure transducer 33 is provided to sense and monitor the pressure within the water vessel 31. An opening in the top of the water vessel 31 leads into a 50 mm-diameter stainless steel pipe 35.

The pipe 35 connects the water vessel 31 to an adsorbent vessel 39. In use, the water vessel 31 represents an evaporation section and the adsorbent vessel 39 represents an adsorption section. A ball valve 36 is provided in the pipe 35 between the water vessel 31 and the adsorbent vessel 39. The ball valve 36 can be closed to prevent fluid communication between the water vessel 31 and the adsorbent vessel 39 or open to varying degrees to allow fluid communication between the water vessel 31 and the adsorbent vessel 39.

The adsorbent vessel 39 is sealed and evacuated. The adsorbent vessel 39 contains an adsorbent material 38. A pressure transducer 37 is provided to sense and monitor the pressure in the adsorbent vessel 39.

A temperature sensor (not shown) is provided to measure the temperature T1 in the water vessel 31 and another temperature sensor (not shown) is provided to measure the temperature T2 in the adsorbent vessel 39.

Figure 4 is a photograph of a metal and glass vessel laboratory test rig of the kind shown schematically in Figure 3. The test rig shown in Figure 4 has all of the features discussed above in relation to Figure 3. Referring to Figure 4, there is a water tank 41 connected to an adsorbent tank 43 by a pipe 47 with a ball valve 48 located about halfway along the length of the pipe 47. A vacuum pump 42 is also shown in Figure 4.

A power supply 45 and a data logger 44 are provided. The data logger 44 receives data from the pressure and temperature sensors. The data logger 44 is connected to a desktop computer 46, where the data can be recorded and analysed.

The metal and glass vessel experiment investigated the thermochemical performance of energy release and storage. During this experimental process, sorption properties (including sorption isotherm and kinetics under conditions close to the operating temperature) of adsorbents were investigated. Meanwhile, the mechanical and hydrothermal stability of selected adsorbents was tested into multiple cycling. This experimental set-up was composed by two main glass vessels 31, 39; 41 43. One of the glass vessels 39; 43 was used to hold the adsorbent material 38 and the other one 31; 41 was for water.

Based on the principle of an adsorption pumping pipe, a scaled cooling system was applied as shown in Figure 4. It consists of two vacuumed glass vessels 41, 43 separated with a valve 48 through steel pipe 47, one vacuumed glass vessel 41 contains water/wick and the other one 43 was filled with dry adsorbent. When the valve 48 was opened, the adsorbent adsorbed water vapour, and then water in the wick began to evaporate and the water vessel 41 section was quickly cooled.

This experiment included the following steps: firstly, weigh materials (adsorbent and water) and dry the adsorbent material using an oven; secondly load the materials in the two vessels and turn on the vacuum machine to evacuate the water vessel and the adsorbent vessel. Due to pressure difference, water evaporates and adsorbs by the adsorbent material which results in a chemical reaction. Finally, experimental data were collected when the reaction completed and stabilized, and the adsorbent material is re-weighed.

Table 2 below shows the amount of materials - lithium nitrate adsorbent and water - measured in grams used in the metal and glass vessel experiments.

**Table 2**

| Materials | $M_b$ (before) | $M_a$ (after) | $\Delta$ M |
|---|---|---|---|
| Lithium nitrate ($LiNO_3$) | 817.5 | 838.9 | 21.4 |
| Water ($H_2O$) | 345.1 | 322.7 | 22.4 |

Before the experiment started, the valve between the two vessels was closed. Water temperature and adsorbent ($LiNO_3$) temperature were very close at around 19°C. When the valve was open, the adsorbent dramatically adsorbed vapour and its temperature rapidly increased. Water section temperature quickly decreased. During this testing process, maximum temperature of adsorbent stood up 30.06°C and water temperature were about 6.72°C.

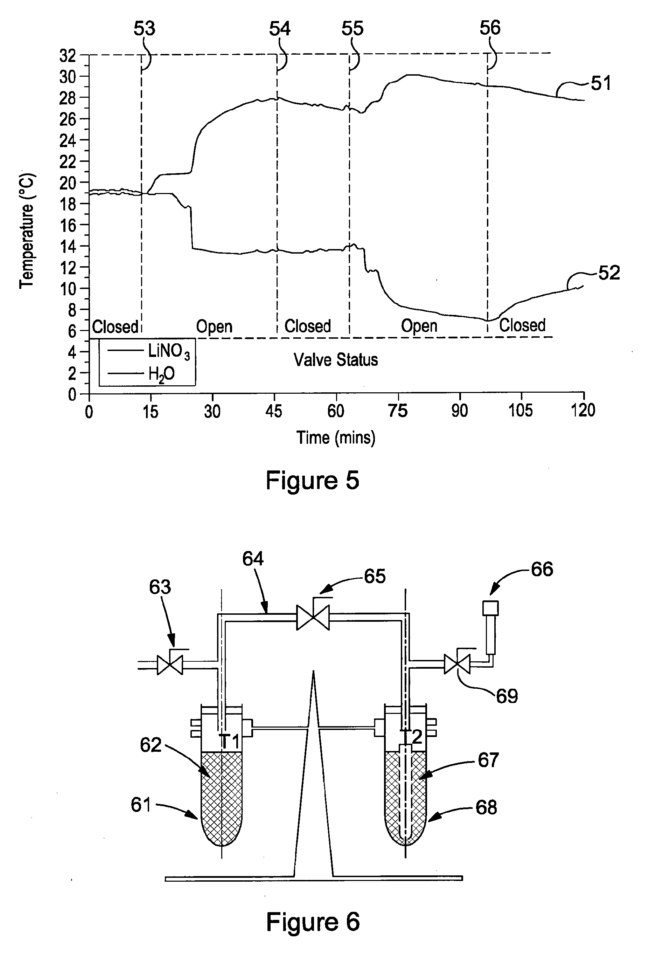

Figure 5 is a graph showing the variation of temperature in the evaporation section and the adsorption section in the metal and glass vessel experiment. Temperature measured in °C is plotted as a function of time measured in minutes. The variation of temperature of the adsorption section over time is shown by line 51 and the variation of temperature of the evaporation section over time is shown by line 52.

The valve 48 was closed from time = 0 to first dashed vertical line 53. For just over 30 minutes between first dashed vertical line 53 and second dashed vertical line 54, the valve 48 was open. Then, for around 15 minutes between the second dashed vertical line 54 and third dashed vertical line 55, the valve 48 was closed. Then, for almost 40 minutes between the third dashed vertical line 55 and fourth dashed vertical line 56, the valve 48 was open. The valve 48 then closed for the remainder of the time period shown on the graph in Figure 5.

*Laboratory test rig - glass tube*

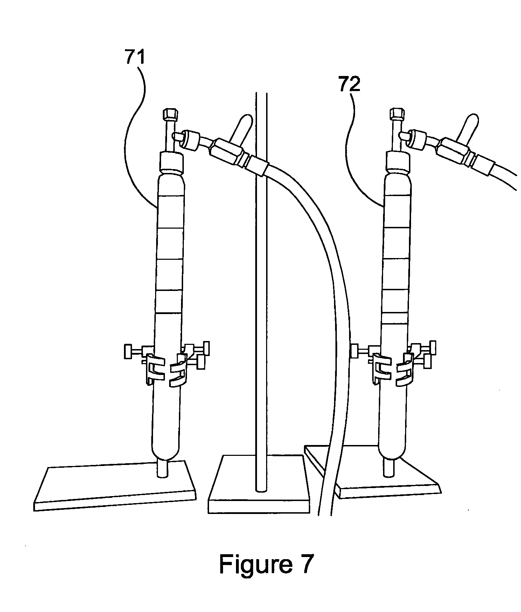

Figure 6 is a schematic diagram of a glass tube laboratory test rig. Figure 7 is a photograph of a glass tube laboratory test rig.

Referring to Figure 6, the glass tube laboratory test rig comprises a first glass tube 61 containing a wick 62 complete with water. In use, the first glass tube 61 provides an evaporation section. The first glass tube 61 may be made from Pyrex®. A temperature sensor (not shown) is provided for measuring the temperature T1 in the first glass tube 61. The glass tube 61 is joined to a second glass tube 68 by a glass pipe 64. A ball valve 65 is located about half-way along the glass pipe 64. Between the first glass tube 61 and the ball valve 65, there is a branch off the pipe 64 which leads to a vacuum pump (not shown). There is a ball valve 63 provided in the branch. The second glass tube 68 contains an adsorbent material 67. A temperature sensor (not shown) is provided for measuring the temperature T2 in the second glass tube 68. Between the ball valve 65 and the second glass tube 68, there is a branch off the pipe 64 which leads to a pressure transducer 66. A ball valve 69 is provided in the branch leading to the pressure transducer 66.

Figure 7 is a photograph of a glass tube laboratory test rig of the kind shown schematically in Figure 6. The test rig shown in Figure 7 has all of the features discussed above in relation to Figure 6. Referring to Figure 7, the glass tube laboratory test rig includes a first tube 71 containing a wick complete with water and a second tube 72 containing an adsorbent material.

As described above, the glass tube test rig comprised two glass (preferably Pyrex®) tubes, a pressure gauge and transducer. Glass tubes were used in order to observe the behaviour of the adsorbents. The adsorbent vessel (i.e. the glass tube containing the adsorbent material) was supplied with a heater (not shown) while the evaporation section was fitted with a wick. The vessels were fitted with thermocouples and data logging equipment. Using this apparatus the dissociation pressures/rate of adsorption of water over various adsorbents were studied as a function of temperature.

In this test, an adsorbent material of silica gel, lithium nitrate and zeolite with water combinations were examined as working pairs. The details of the adsorbent material, water and other parameters are shown in Table 3 below

**Table 3**

|  | Test 1 | Test 2 | Test 3 |
|---|---|---|---|
|  | Silica gel | Zeolite | Lithium Nitrate ($LiNO_3$) |
| Weight of Adsorbent (gram) | 30 | 30 | 30 |
| Weight of Water (gram) | 20 | 20 | 20 |
| Vaccum Pressure in Tube (bar) | -0.95 | -0.95 | -0.95 |
| Adsorption Process Completed (mins) | 9 | 17 | 4 |
| Max. Adsorbent Temperature Achieved (adsorption section) (°C) | 26.6 | 40.03 | 28.53 |
| Min. Adsorbate Temperature Achieved (evaporation section) (°C) | 11.5 | 10.43 | 7.1 |

Lithium nitrate performed particularly well in this test. Lithium nitrate adsorbed the water vapour in a very short period of time and raised the initial operation temperature over 8°C in less than 4 minutes.

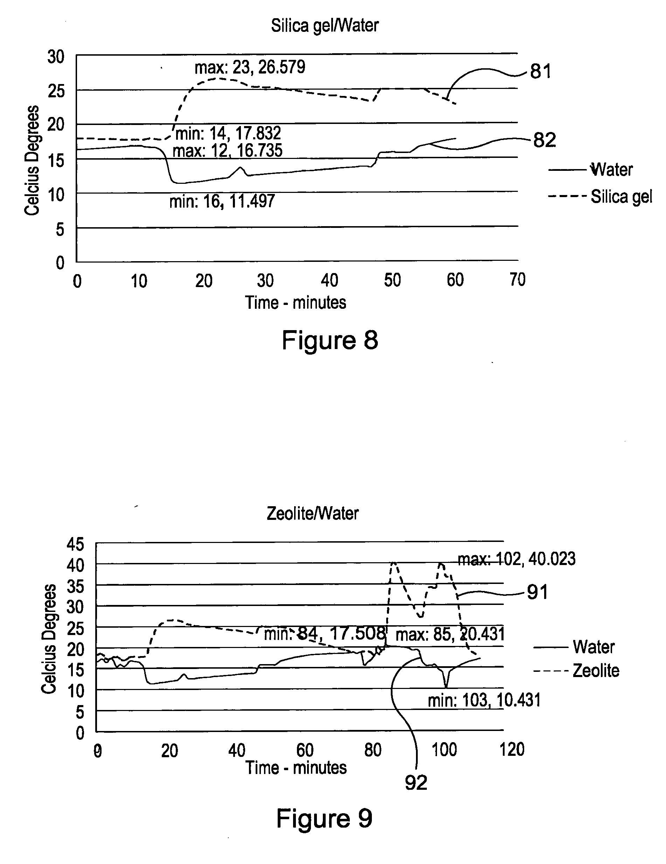

Figures 8, 9, 10 and 11 show results from the glass tube experimental test rig experiments.

Figure 8 is a graph showing the variation of temperature of evaporation section (water) indicated by line 82 and adsorption section (silica gel adsorbent) indicated by line 81 in a glass tube laboratory test rig.

Figure 9 is a graph showing the variation of temperature of evaporation section (water) indicated by line 92 and adsorption section (zeolite adsorbent) indicated by line 91 in a glass tube laboratory test rig.

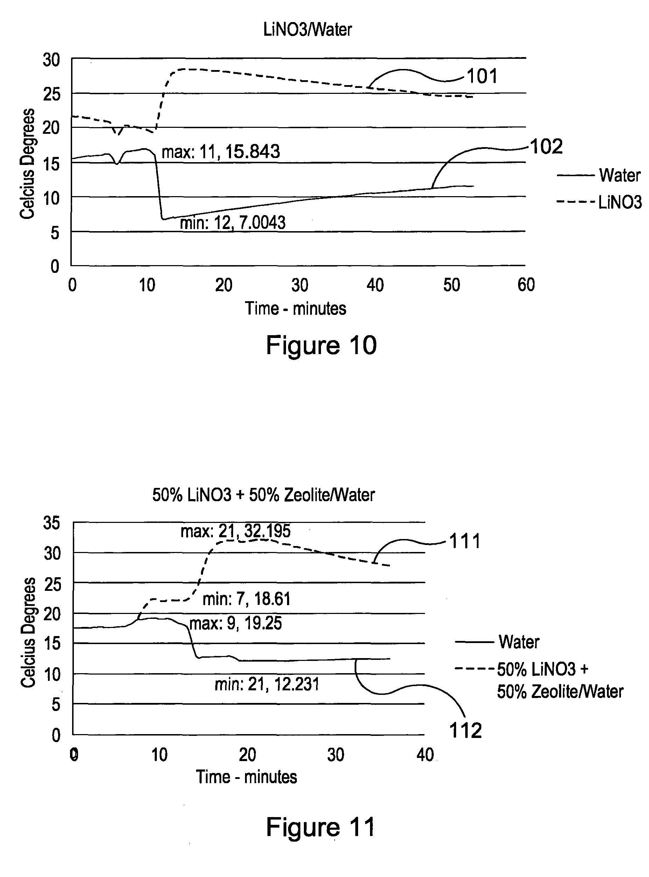

Figure 10 is a graph showing the variation of temperature of evaporation section (water) indicated by line 102 and adsorption section (lithium nitrate adsorbent) indicated by line 101 in a glass tube laboratory test rig.

Figure 11 is a graph showing the variation of temperature of evaporation section (water) indicated by line 112 and adsorption section (50% lithium nitrate, 50% zeolite adsorbent) indicated by line 111.

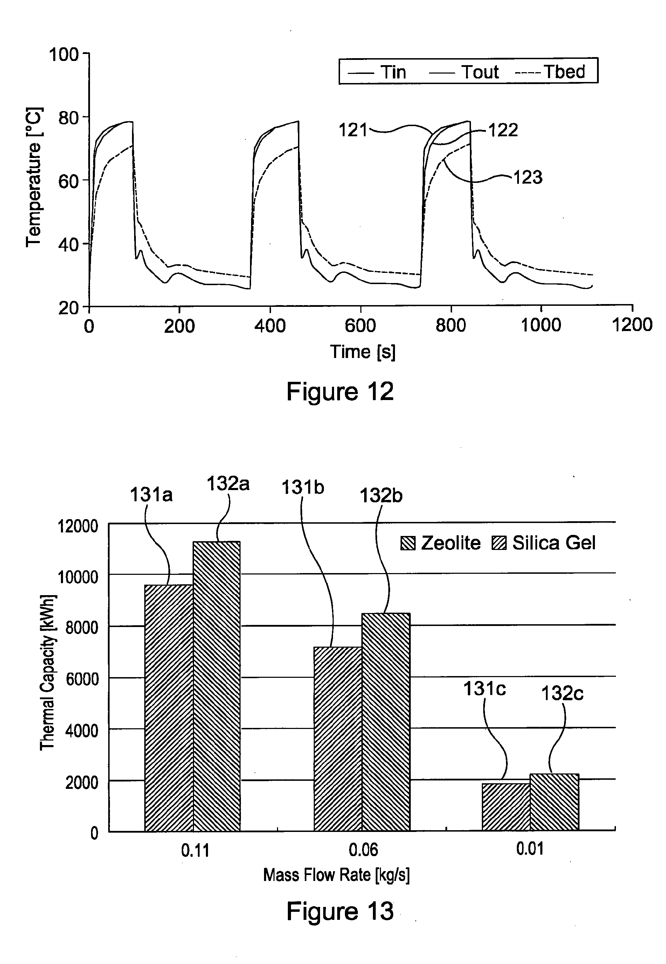

Figure 12 is a graph showing the variation in temperature of the heat transfer fluid and the adsorbent bed ($LiNO_3$ in a silica matrix) over three cycles. The temperature of the heat transfer fluid is measured at two points, $T_{in}$ and $T_{out}$, plotted as lines 121 and 122 respectively. Line 123 plots the temperature of the adsorbent bed, $T_{bed}$.

**Computer modelling**

Computer modelling was carried out in order to further verify the principles underlying the invention. The results of the computer modelling were in good agreement with the experimental results.

The computer modelling was based on the principle of adsorption pumping pipe. An analytical method with Fortran programme is used to determining the water temperature in the water vessel (evaporation section) and energy capacity of the system. The interference effects between heat input capacity, chilled water mass flow rate entry to the system and chilled water temperature were developed. Chilled water was circulated in a water jacket outside the absorption section to determine the amount of heat/energy capacity that was generated in the adsorbent bed, and this heat/energy capacity was then removed from the system by the low grade temperature (i.e., chilled water).

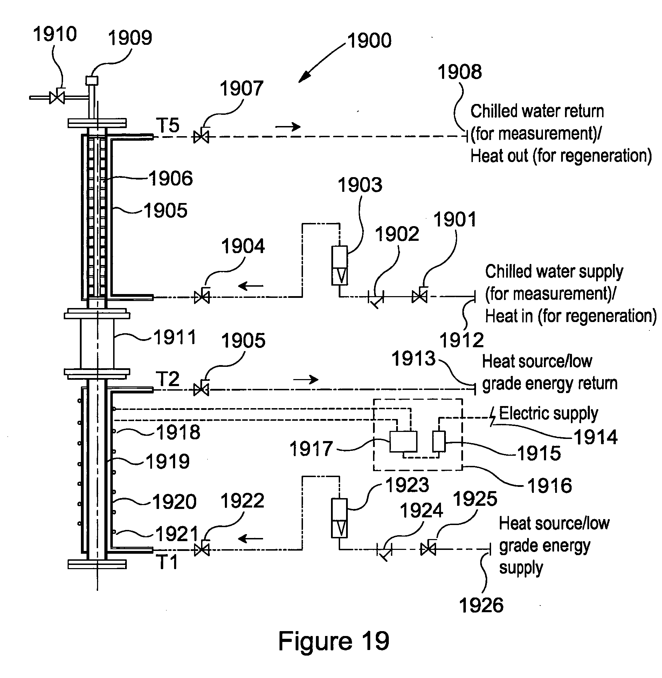

Zeolite and silica gel adsorbent material were selected to predict the energy capacity of a thermochemical energy storage pumping pipe (TESPP) system, the amount of adsorbent material mass used in the simulations for zeolite was 0.5872kg, with the density of 800kg/m$^3$ and silica gel had a mass of 0.5358kg with the of 730kg/m$^3$. Figure 19 shows schematically a thermochemical energy storage pumping pipe (TESPP) computer simulation model unit 1900.

The unit 1900 comprises an adsorption heat pipe section 1905 separated from a second heat pipe section 1919 by a 50-mm two-piece ball valve 1911. The ball valve 1911 has two flanges to enable the ball valve 1911 to be joined to each of the heat pipe sections 1905, 1919. Each heat pipe section 1905, 1919 is made from stainless steel, is 500 mm long and has an inner diameter of 50 mm. The outside of each heat pipe section is provided with a plurality of heat exchange fins. The two heat pipe sections 1905, 1919 and the ball valve 1911 are surrounded by an insulating material 1921, e.g. a Superwool insulating material

The adsorption heat pipe section 1905 contains an adsorbent material 1906 along substantially all of its length. The top is connected to a pressure transducer 1909, beyond which is located a ball valve 1910 in a pipe leading to a vacuum pump (not shown).

In use, chilled water is passed around the outside of the adsorption heat pipe section 1905 in a first water jacket located between the insulating material 1921 and the adsorption heat pipe section 1905. Chilled water passes, in use, at a rate of from 2 to 20 litres per minute (1/min) from a chilled water supply 1912, through an isolator valve 1901, a ball valve complete with strainer 1902 a flow meter 1903 and a further valve 1904 before passing around the outside of the adsorption heat pipe section 1905. The heat exchange fins assist with heat exchange to/from the chilled water. The chilled water then passes to a chilled water return conduit 1908. A further valve 1907 is present in the chilled water return conduit 1908.

In use, energy from a heat source or low grade energy supply 1926 is transferred by a fluid, e.g. water, which is passed around the outside of the second heat pipe section 1919 in a second water jacket 1920. The second water jacket 1920 has an outer diameter of 80 mm and is 440 mm long. Before reaching the second water jacket 1920, the water passes at a rate of from 2 to 20 litres per minute (1/min) through an isolator valve 1925, a ball valve complete with strainer 1924, a flow meter 1923 and a further valve 1922. The heat exchange fins assist with heat exchange to/from the water as it passes through the second water jacket 1920. The water then passes into a return conduit 1913, which leads back to the heat source or low grade energy supply. A further valve 1905 is present in the return conduit 1913.

Around the outside of the second water jacket 1920 and beneath the insulating material 1921, there is a flexible rope heater 1918 having a maximum power output of 400 W. Power is provided to the heater 1918 from an electricity supply 1914. A controller 1916 comprising a power supply main switch 1915 and a temperature and/or process control module 1917 is operable to control, in use, the heater 1918. The controller 1916 may take the form of a wall-mountable box. Such a wall mountable box may be made from any suitable material, e.g. a glass reinforced plastic, and may be almost any size. For instance, the controller 1916 may be 219 mm by 319 mm by 370 mm. The control module 1917 may utilise fuzzy logic.

Temperature is measured at several locations within the units, e.g. using one or more thermocouples (not shown) such as type T polytetrafluoroethylene (PTFE) moulded thermocouples. Temperature is measured at the following locations:

T1 - as fluid enters the second water jacket;
T2 - as fluid enters the return conduit on leaving the second water jacket;
T3 - at a central location within the second water jacket;
T4 - as chilled water enters the water jacket around the adsorption heat tube section;
T5 - as chilled water enters the chilled water return conduit;
T6 - at a central location within the water jacket around the adsorption heat tube section; and
T7 - at the top of the adsorption heat tube section.

A summary of the properties of the two adsorbent materials (zeolite and silica gel) for the simulation is shown in Table 4 below.

| Material Properties \ Adsorbent Material | Zeolite | Silica Gel (SiO₂) |
|---|---|---|
| Density (kg/m³) | 800 | 730 |
| Spec. Heat Capacity (J/kgK) | 921 | 921 |
| Thermal Conductivity (W/mK) | 0.50 | 0.174 |
| Pre-exponential Constant (m²/s) | $2.54 \times 10^{-4}$ | $2.54 \times 10^{-4}$ |
| Activition Energy of Surface Diffusion (J/mol) | $4.20 \times 10^{4}$ | $2.33 \times 10^{6}$ |
| Average Particle Radius (m) | $1.60 \times 10^{-3}$ | $3.00 \times 10^{-3}$ |
| Max. Porosity in per Kilogram (cm³/g) | 0.35 | 0.36 |
| Constant "d" of Adsorbent & Adsorbate (no unit) | $8.68 \times 10^{-7}$ | $7.10 \times 10^{-4}$ |
| Constant "n" (no unit) | 2.08 | 1.60 |
| Adsorbed Concentration (kg/kg) | 0.100 | 0.346 |
| Adsorption Heat Rate of Adsorbent Particle (J/kg) | $2.500 \times 10^{6}$ | $2.693 \times 10^{6}$ |

**Table 4**

By defining the effective heat transfer coefficient, the average temperature of water vessel can be determined by: -

$$\frac{d}{dt}(C_w \cdot M_w \cdot T_w) = -h_w \cdot A_w \cdot \left(T_w - T_f\right) + q_{loss} \qquad (1)$$

Here, subscript 'w' and 'f' express water and refrigerant liquid film, respectively.

There are no suitable equations available to calculate heat transfer in water tank, thus $h_w$ was determined by some experiments on temperatures drop of water in a normal tank. The results showed that the effective heat transfer coefficient $h_w$ was in the range of 400 to 600$W/m^2 \cdot K$. Additionally, as a vacuum gap exists, heat transfer $q_{loss}$ from ambient was neglected.

The temperature of wick inside the water vessel was considered to be uniform and consistent with the temperature of thin water tank wall. After making the assumption that evaporation of water in the wick always in equilibrium, the water film temperature can be given by:

$$\frac{d}{dt}\left(C_f \cdot M_f \cdot T_f + C_{ww} \cdot M_{ww} \cdot T_f\right) = h_w \cdot A_w \cdot \left(T_w - T_f\right) - L \cdot M_s \cdot \frac{dq}{dt} \qquad (2)$$

Heat transfer and mass transfer in a packed bed of adsorbent particles are complicated and coupled, so some following simplifications have to be made: (a) Lumped model may simply be applied to adsorbent bed, in which heat rejection to heat sink can be calculated by applying effective heat transfer coefficient. Because adsorption of dry adsorbent particle is very fast within the first few minutes after activation, whereas heat transfer is poor in a packed bed, this simplification is acceptable especially for thin adsorbent bed. (b) There is no intra-particle mass transfer resistance, that is, pressure is uniform, and mass transfer is completely controlled by the inter-particle diffusion.

Based on the above assumptions, the heat balance of the adsorbent bed is described by:

$$\frac{d}{dt}(C_s \cdot M_s \cdot T_s + C_r \cdot M_r \cdot T_s) = H \cdot M_s \cdot \frac{dq}{dt} - h_{sw} \cdot A_{sw} \cdot \left(T_s - T_w\right) \qquad (3)$$

Here, the equivalent heat transfer coefficient $h_s$ is estimated by the following equation as the first approximation (A. Sakoda and M. Suzuki, 1986):

$$h_{sw} = \frac{k_e}{\delta}$$

$$(3a)$$

Where, $k_e$ is the effective thermal conductivity of the packed bed and $\delta$ the thickness of bed or half distance between heat transfer fins.

For an adsorbent tank with heat rejection to ambient, the temperature of wall is by:

$$\frac{d}{dt}(C_w \cdot M_w \cdot T_w) = h_{sw} \cdot A_{sw} \cdot \left(T_s - T_w\right) - h_a \cdot A_a \cdot \left(T_w - T_a\right) \qquad (4)$$

If adsorption heat is released to heat sink; equation (4) is replaced by:

$$\frac{d}{dt}(C_w \cdot M_w \cdot T_w) = h_{sw} \cdot A_{sw} \cdot \left(T_s - T_w\right) - h_{hs} \cdot A_{hs} \cdot \left(T_w - T_{hs}\right) \qquad (4a)$$

The average temperature of heat sink is determined by:

$$\frac{d}{dt}(C_{hs} \cdot M_{hs} \cdot T_{hs}) = h_{hs} \cdot A_{hs} \cdot \left(T_w - T_{hs}\right)$$

$$(5)$$

Equations (1)~(5) can give the temperature responses of water, water film, adsorbent bed, tank wall and heat sink with time, respectively. However, adsorption rate $dq/dt$ must be known first.

For an adsorbent particle, the rate of adsorption is related with a linear driving force expressed by the difference of the actual amount adsorbed, q, and the possible equilibrium amount adsorbed, $q^*$ approximation (A. Sakoda and M. Suzuki, 1986, and M. Suzuki, 1990):

$$\frac{dq}{dt} = k_s \cdot a_p \cdot (q^* - q) \qquad (6)$$

Here, $k_s \cdot a_p$ is an effective mass diffusion coefficient given as

$$k_s \cdot a_p = 15 \cdot D_s / R_p{}^2 \qquad (6a)$$

Where, $R_p$ is the particle radius and $D_s$ is the effective surface diffusion coefficient.

Strictly speaking, the surface diffusion coefficient is dependent on the temperature and the amount adsorbed. However, the dependency on the adsorption amount is weak, thus it is regarded as a function of temperature only:

$$D_s = D_{s0} \cdot \exp\left(-\frac{E_a}{RT}\right) \qquad (6b)$$

Here, $D_{s0}$ is a pre-exponential constant and $E_a$ is the activation energy of surface diffusion.

In fact, one important condition on using equation (6) is that $D_s$ must be constant (Chi Tien, 1994). For quick adsorption process in this scaled cooling system, temperature rise in adsorbent bed is fast, thus it is not a good option to calculate $D_s$ by equation (3). Therefore, $D_s$ as a constant will be decided with a good agreement between calculation and experimentation.

Equilibrium adsorption content of water in zeolite can be described by Dubinin Equation (R. E. Critoph, 1988, and L. Luo and M. Feidt, 1991):

$$q^* = \rho \cdot V_0 \cdot \exp\left[-D \cdot \left(T_s \cdot \ln\frac{P_s}{P}\right)^n\right] \qquad (7)$$

Here, $D$ and $n$ are constants relevant to properties of adsorbent and refrigerant.

Based on the above equations, a calculation procedure has been developed to simulate the performances of scaled cooling system and also some simple comparison with experimentation was made.

Considering the complexity of processes in the thermochemical energy storage pumping pipe (TESPP) system, the agreement of simulation and experimentation was satisfactory. Thus, the lumped model was acceptable and significant for preliminary investigation of this heat storage capacity based on an adsorption pumping pipe.

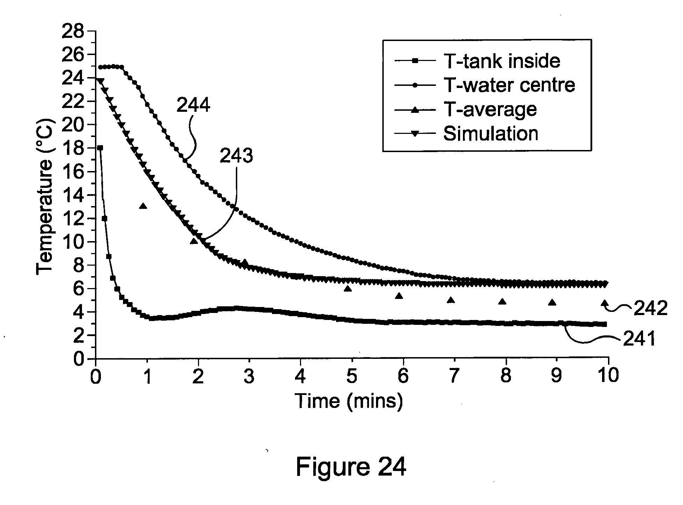

Figure 24 shows a comparison of simulated average water temperature (line 243) with experimental water temperature for zeolite and water. The data points in series 242 are the average of is the temperature measured inside the tank (line 241) and the temperature measured

The computer modelling results showed that 1kg of zeolite absorbent material would be able to produce 9.60kWh thermal capacity and silica gel could produce a further 18% more compared with zeolite (i.e., 11.28kWh). Both thermal capacities were simulated under the heat source temperature of 45°C and chilled water temperature of 15°C. Both thermal capacities were also simulated under the heat source temperature of 40°C and chilled water temperature of 15°C.

Figure 13 shows the variation in thermal capacity for a TESPP according to the invention comprising two different adsorbents (zeolite and silica gel) for three different mass flow rates, 0.11 kg/s, 0.06 kg/s and 0.01 kg/s. The results for zeolite are shown in bars 131a, 131b and 131c. The results for silica gel are shown in bars 132a, 132b and 132c. The heat source temperature was 45°C and the chilled water temperature was 15°C.

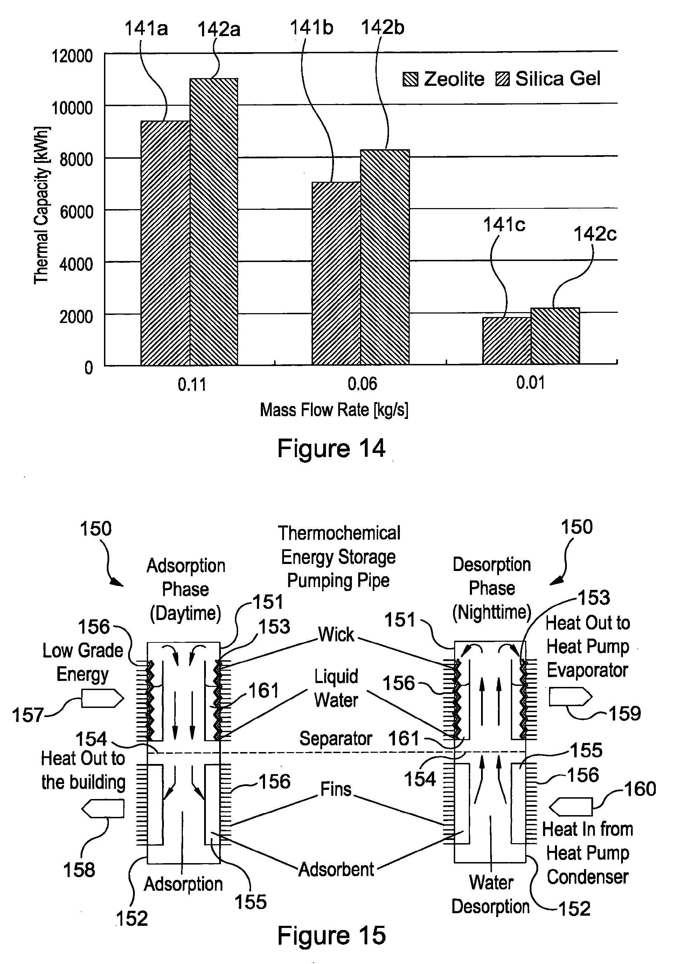

Figure 14 shows the variation in thermal capacity for a TESPP according to the invention comprising two different adsorbents (zeolite and silica gel) for three different mass flow rates, 0.11 kg/s, 0.06 kg/s and 0.01 kg/s. The results for zeolite are shown in bars 141a, 141b and 141c. The results for silica gel are shown in bars 142a, 142b and 142c. The heat source temperature was 40°C and the chilled water temperature was 15°C).

The effect of the heat source temperature and chilled water mass flow rate play an important role in determining the overall energy capacity. As the heat source temperature/operating temperature increased, the energy capacity of the system increased relatively. A similar pattern was also observed in respect of the chilled water's mass flow rate.

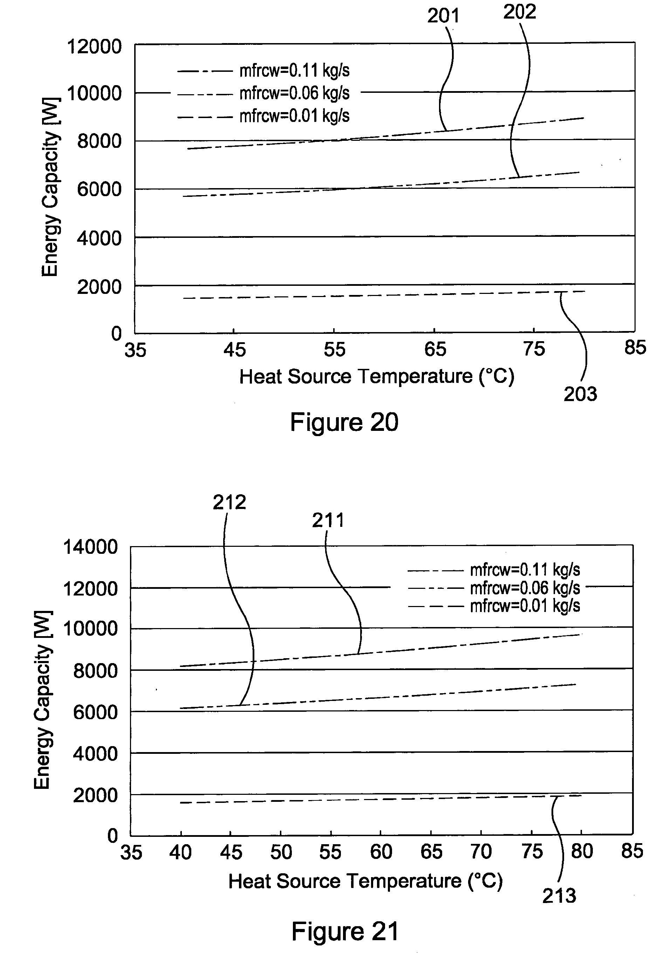

Figure 20 is a graph of energy capacity versus heat source temperature for a TESPP system according to the invention being operated at three chilled water mass flow rates, 0.11 kg/s, 0.06 kg/s and 0.01 kg/s. The adsorbent was zeolite. The heat source temperature varied from 40°C to 80°C and the chilled water temperature was 15°C. Line 201 shows the results for 0.11 kg/s chilled water mass flow rate, line 202 shows the results for 0.06 kg/s chilled water mass flow rate and line 203 shows the results for 0.01 kg/s.

Figure 21 is similar to Figure 20, except that the results are for a TESPP in which the adsorbent was silica gel. Line 211 shows the results for 0.11 kg/s chilled water mass flow rate, line 212 shows the results for 0.06 kg/s chilled water mass flow rate and line 213 shows the results for 0.01 kg/s.

The simulation results showed that the silica gel would provide a higher energy capacity by 6.5% to 8.3% compared to zeolite under the same heat source temperature and mass flow rate of chilled water temperature. For example, the energy capacity for the zeolite with heat source temperature of 45°C and mass flow rate of 0.11 kg/s was 7828.46W, 5845.96W for 0.06kg/s and 1499.77W for 0.01kg/s. Similarly, the energy capacity for the silica gel with the same heat source temperature and mass flow rate of 0.11kg/s was 8397.55W, 6308.3W for 0.06kg/s and 1639.81W for 0.01kg/s.

*The effect of the Chilled water inlet temperature and Chilled water mass flow rate*

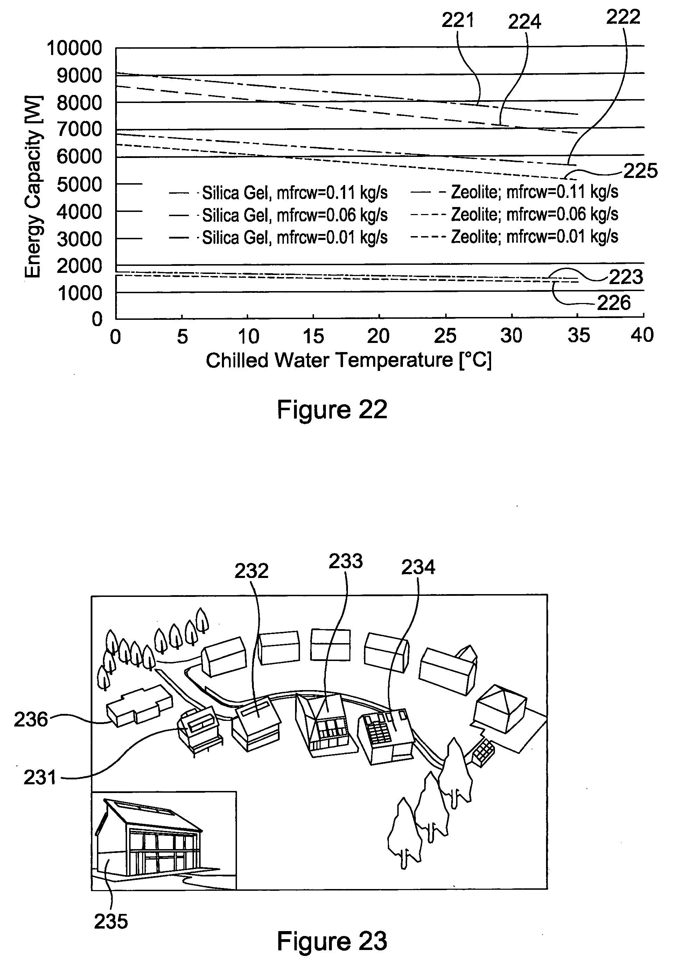

Figure 22 shows the variations of energy capacity of a TESPP system versus chilled water inlet temperature. These simulations were carried out under the heat source temperature of 45°C and the chilled water inlet temperature varies from 0°C to 35°C. Line 221 plots the results for a TESPP having a silica gel adsorbent operating with a chilled water mass flow rate of 0.11 kg/s. Line 222 plots the results for a TESPP having a silica gel adsorbent operating with a chilled water mass flow rate of 0.06 kg/s. Line 223 plots the results for a TESPP having a silica gel adsorbent operating with a chilled water mass flow rate of 0.01 kg/s. Line 224 plots the results for a TESPP having a zeolite adsorbent operating with a chilled water mass flow rate of 0.11 kg/s. Line 225 plots the results for a TESPP having a zeolite adsorbent operating with a chilled water mass flow rate of 0.06 kg/s. Line 226 plots the results for a TESPP having a zeolite adsorbent operating with a chilled water mass flow rate of 0.01 kg/s.

The energy capacity showed highest for both absorbent materials at the highest mass flow rate of 0.11 kg/s, next highest for the mass flow rate of 0.06kg/s and lowest for the mass flow rate of 0.01kg/s. The first two mass flow rates removed the heat from the absorption heat pipe system under the turbulent flow, but were lower with a laminar flow (i.e., 0.01kg/s). Similarly, the higher mass flow rate (i.e., 0.11kg/s) would provide a better performance. The coefficients of performance (COP) of silica gel and zeolite were 1.68 and 1.59, respectively, at the chilled water inlet temperature of 0°C. However, as laminar flow entered the system with mass flow rate of 0.01kg/s, the COP for zeolite and silica gel were 80.94% and 80.56% less than that for mass flow rate of 0.11 kg/s.

Figure 15 illustrates schematically the working principle of an adsorption heat pipe 150 according to the invention. On the left hand side of Figure 15, the adsorption heat pipe 150 is shown in an adsorption phase, which typically may be during the daytime. On the right hand side of Figure 15, the adsorption heat pipe 150 is shown in a desorption phase, which typically may be during the night-time.

The adsorption heat pipe 150 comprises an evaporation section 151, which contains a wick 153 and liquid water 161. The adsorption heat pipe 150 also comprises a reactor section 152 comprising an adsorbent bed 155. A permeable separator 154 is located between the evaporation section 151 and the reactor section 152. The outer surface of the adsorption heat pipe 150 is provided with a plurality of heat exchange fins 156.

In the adsorption phase, low grade energy 157 is brought into heat exchange relationship with the evaporation section 151. As shown by the arrows within the heat pipe 150, in the adsorption phase, water vapour evaporates from the wick 153 and the liquid water 161 and is adsorbed by the adsorbent bed 155. Heat is released, since the adsorption of water by the adsorbent bed is an exothermic process. This heat is exchanged with a heat transfer fluid and transported away from the adsorption heat pipe to provide heat 158 for use in a building, typically for space heating and/or hot water.

In the desorption phase, high grade energy, e.g. off-peak electricity and/or renewable electricity, is used to operate a heat pump. As shown on the right hand side of Figure 15, heat 160 is transferred to the reactor section 152, e.g. from a heat pump condenser. Heat is absorbed in the heat pipe as a result of desorption (an endothermic process) of water from the adsorbent bed. As the arrows within adsorbent heat pipe indicate, water vapour passes from the reactor section 152 to the evaporation section 151. Heat is exchanged with a heat transfer fluid and transported away from the evaporator section of the adsorption heat pipe, e.g. to a heat pump evaporator.

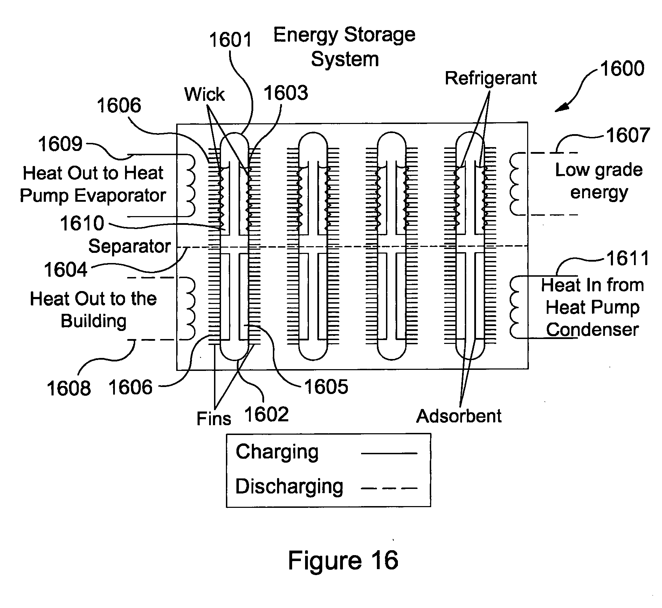

Figure 16 illustrates an energy storage unit 1600 according to the invention. The principle of operation of the energy storage unit 1600 is as described above, e.g. in relation to Figure 15. The energy storage unit 1600 may contain one or more adsorption heat pipes. In Figure 16, four adsorption heat pipes are shown. For clarity, only one of the adsorption heat pipes is provided with reference numerals.

Each adsorption heat pipe comprises an evaporation section 1601 and a reactor section 1602. The evaporation section 1601 comprises a wick 1603 and liquid water 1610. The reactor section 1602 comprises an adsorbent bed 1605. A permeable separator 1604 is located between the evaporation section 1601 and the reactor section 1602. A first fluid loop 1611 transfers heat into the energy storage unit 1600 from a heat pump condenser (not shown) when the energy storage unit is charging (i.e. is in a desorption phase). A second fluid loop 1609 transfers heat out to a heat pump evaporator during the desorption phase. When the energy storage unit 1600 is discharging (i.e. is in an adsoption phase), low grade energy 1607 is supplied to the energy storage unit 1600 and heat 1608 is transferred away from the energy storage unit 1600 to provide useful heat for a building.

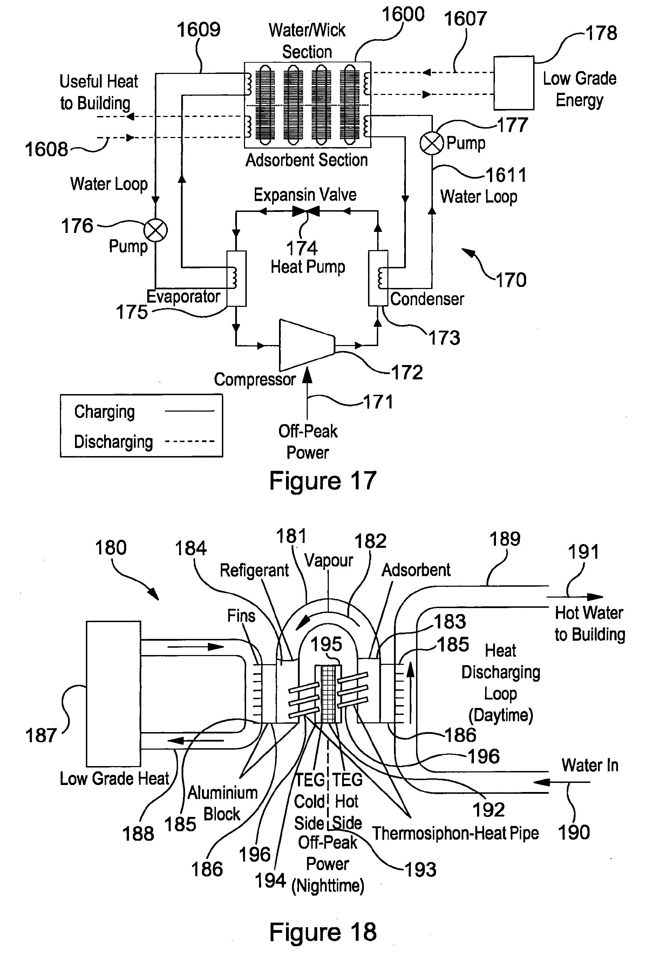

Figure 17 shows how the energy storage unit 1600 can be integrated with a heat pump to provide a thermal storage system 170. The heat pump comprises a circuit including a compressor 172, a condenser 173, an expansion valve 174 and an evaporator 175.

When the system 170 is charging, the compressor 172 is powered using off-peak power 171. The first fluid loop 1611 is a water loop, which transfers heat from the condenser 173 to the energy storage unit 1600 when the system 170 is charging (i.e. absorbing heat). Water is driven round the first fluid loop 1611 by a pump 177. The second fluid loop 1609 is a water loop, which transfers heat from the energy storage unit 1600 to the evaporator 175 when the system 170 is charging. Water is driven round the second fluid loop 1609 by a pump 176.

Figure 18 illustrates a thermal storage system 180 in which an adsorption heat pipe 181 is integrated with a thermoelectric heat pump 192.

The adsorption heat pipe 181 comprises an evaporation section 184 containing a refrigerant, typically water and a reactor section 183 containing an adsorbent. The reactor section 183 and the evaporation section 184 are connected by a curved section of pipe, which gives the adsorption heat pipe 181 an overall n-shape.

The reactor section 183 and the evaporation section 184 are each connected to a conducting aluminium block 186, which is provided a plurality of heat exchange fins 185 protruding into a conduit containing a heat transfer fluid. One such conduit 188 transports low grade heat 187 to the adsorption heat pipe 181 during its heat discharge phase (typically during the day). When the adsorption heat pipe 181 is discharging heat, heat is generated in the reactor section 183, which heat is transferred via the aluminium block 186 and heat exchange fins 185 to water in a heat discharging loop 189. Water 190 flows into the heat discharging loop 189, picks up heat from the adsorption heat pipe 181 and leaves the heat discharging loop 189 as hot water 191 for use in a building.

When the thermal storage system 180 is charging, typically at night, power, e.g. off-peak power, is provided to the thermoelectric heat pump 192. The thermoelectric heat pump 192 comprises a thermoelectric generator having a hot side 195 and a cold side 194. The hot side 195 is operably connected to the reactor section 183 of the adsorption heat pipe 181 by a plurality of thermosiphon heat pipes 196. The cold side 194 is operably connected to the evaporation section 184 of the adsorption heat pipe 181 by a plurality of thermosiphon heat pipes 196.

The applicant's calculations suggest that the present invention could provide significant cost savings for a typical UK residential house with insulation in excess of that required under 2002 Part L building regulations. For instance, assuming typical peak and off-peak energy supply prices, a daily 50kWh heating capacity and a coefficient of performance of 3.5 (ratio of heat output to electricity input), the annual saving in running cost as compared with a gas central heating system for the house could be in excess of £200.

The payback period may depend on the cost difference between a gas boiler and a system according to the invention. Typically, the payback period may be less than 10 years, say around six or seven years.

There is considerable potential for deployment of the present invention in the domestic sector. There are about 28 million houses in the UK with around 200,000 new houses being built every year. If a system according to the invention were fitted to 1% of new houses and retro-fitted to 0.01% of the existing houses each year, then the potential annual market in the UK alone could be around 4800 units.

By assuming a 50kWh (e.g., 5kW for 10 hours) heating load for a residential house and a storage density of 1MJ/kg or 1000kJ/kg, the mass of adsorbent required for thermal storage is estimated to be 50kWh * 3600s ÷ 1000kJ/kg = 180kg. For a conservative packed density of 300kg/m$^3$ in an adsorption thermal storage unit, the volume of unit would be 180kg ÷ 300kg/m$^3$ = 0.6m$^3$. This volume is quite close to the conventional hot water storage in houses. Hence, there may not be many space requirement issues associated with installing the adsorption thermal storage unit. The unit could be installed in place of a boiler or the unit could be installed outside.

The adsorption thermal storage unit may have a structure like a tube-shell heat exchanger and may comprise a bunch of individual adsorption heat pipes. Changing the number of individual pipes can scale up or down the unit to give different thermal storage capacity. Hence, the adsorption thermal storage unit may be completely scalable.

The adsorption thermal storage unit may be based on use of $LiNO_3$/silica, $LiNO_3$/vermiculite, $CaCl_2$ or zeolites and water as the working substance. These materials are natural and environmentally friendly. In addition, the unit is operated at low temperature (e.g., 0 to 80°C) and at lower pressures than the atmospheric pressure, so it produces no issues of safety. Furthermore, the adsorbent is contained in a number of sealed, preferably factory-sealed, tubes, thereby minimising the risk of leakage and exposure to installers and the public. At the end of the unit's working life, the tubes can be removed and the adsorbent safely recovered and recycled under controlled conditions in a factory.

The lifetime of a TESPP is estimated to be similar to that of a heat pump, solar panels, gas boiler etc. (i.e., about 15 to 20 years). The estimation is based on the literature evidence on the number of cycles which an adsorbent can undergo. Assuming 150 cycles per year for a TESPP system then the lifetime spec would be 3000 cycles which is generally achievable for adsorbents.

Advantageously, as its elemental unit is a sealed "passive" tube, the TESPP system will be resistant to external damage and mechanical wear and so doesn't need much maintenance.

An adsorption thermal unit may appear like a tube-shell heat exchanger and could be installed by building service engineers. For a domestic application, the overall weight of unit may be about 200kg and could be handled by two persons with appropriate equipment. The system including heat pump may be designed to use 240V mains electricity and mains water. The system can be scaled into a parallel arrangement if necessary to provide a number of standard sizes suited to typical domestic and small volume industrial buildings which represent the vast majority of typical SME businesses.

The system is based on the application of an adsorption heat pipe working principle which incorporates a reactor section (adsorbent bed) and condenser/evaporator refrigerant section. The benefits of the TESPP system compared with a bulky heat exchanger with packed adsorbent material may include an improved heat transfer and an overall enhanced performance of the energy storage system. Typically, heat may be stored in the system at night with the drive of off-peak power electricity supply or any form of renewable energy source, such as wind power. The off-peak or renewable electricity may be used to power the heat pump and heat may be extracted from either the ground or the ambient air. During the day, the stored heat may be released due to adsorption of vapour on the adsorbent. With this type of operation it may be possible to offset energy supply derived from fossil fuels and thereby mitigate $CO_2$ emissions.

By utilising the thermal energy storage system according to the invention during off-peak hours and supplying the stored energy during the day, the level of peak-time demand from energy supply companies could be reduced.

The combination of the heat pump system and TESSP system may be very attractive, as it may be cost effective and may have a relatively large amount of thermal energy storage. This new generation energy storage system may be able to provide energy needed for space heating and hot water in the domestic and also in the commercial building sector, e.g. in office buildings, as well as schools, hospitals and other public buildings with demand for heating and/or cooling.

Figure 23 shows a plurality of houses 231, 232, 233, 234, 235 of varying sizes and a small commercial building 236. A thermochemical energy storage system according to the invention may be installed into any of these buildings. The thermochemical energy storage system may be tunable at least partially to a particular building or type of building, e.g. based on one or more of the shape and size of the building and the rooms within it, the level of insulation of the building, the climate at the building's location and typical occupancy levels and patterns. Accordingly, the thermochemical energy storage system may be operable in accordance with a predetermined program specific to a given building or building type. Operation of the thermochemical energy storage system may be controlled using fuzzy logic.

The thermochemical energy storage system may be connected with an existing central heating system and a ground source heat exchanger or a solar collector system.

Computer modelling and simulations may be carried out in order to tune a thermochemical energy storage system according to the invention. Alternatively or additionally, in order to tune a thermochemical energy storage system according to the invention, performance of the system, e.g. a prototype system, in a building may be monitored for a period of time with the building under occupation (i.e. under real-life context). Environmental monitoring may be undertaken using a network of temperature, humidity and air quality sensors within the building, e.g. house. Electricity use may be monitored using whole building, circuit and appliance meters (including lighting). Energy meters may be used to monitor energy associated with space heating and hot water supply. A Real-Time Location System (RTLS), e.g. using ultra wideband (UWB) radio frequency (RF) technology, with high positional accuracy and reliability may be used to track patterns of space usage in the building for time and location, by determining their 'real-time' occupancy patterns. The RTLS may use a network of static sensors positioned around the house which can pick up the 3D location of compact tags carried by the building's occupants. Initially, monitoring may be carried out for 6 months or more, in order to provide a complete seasonal cycle. The collected data may be analysed to fully evaluate the performance of the system in terms of its overall efficiency in relation to the demand variation for heating, user behaviour and operating costs.

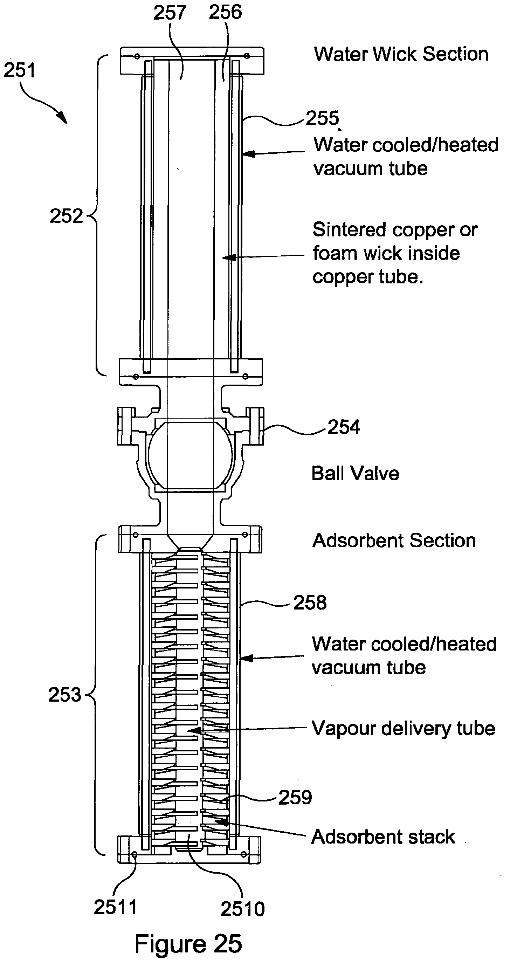

An example embodiment of an adsorption heat pipe 251 is shown in Figure 25. The adsorption heat pipe 251 comprises an evaporation section 252 and an adsorption section 253 with a ball valve 254 between the evaporation section 252 and the adsorption section 253. When the ball valve 254 is open there is fluid communication between the evaporation section 252 and the adsorption section 253.

The evaporation section 252 comprises a water cooled/heated vacuum tube 255. Within the vacuum tube 255, there is a wick 256, inside which is arranged a vapour flow channel 257. The wick 256 may comprise sintered copper or foam.

The adsorption section 253 comprises a water cooled/heated vacuum tube 258. Within the vacuum tube 258, there is an adsorbent stack 259 and a vapour delivery tube 2510. The adsorbent stack 259 comprises a plurality of layers of adsorbent material separated by discs made of sintered copper or foam copper. The vapour delivery tube 2510 is located centrally within the vacuum tube 258 and extends along the length of the vacuum tube 258. The vacuum tube 258 is also provided with a removable base plate 2511.

Typically, the working fluid may be water. The heat pipe 251 is evacuated, thereby reducing the boiling point of the water within it. During charging, heat (e.g. no more than 60 °C, say approximately 45 °C) is applied to the adsorbent material. This causes the hydrated adsorbent material to dissociate, thereby liberating water vapour, which is then condensed and stored in the wick 256. During discharging, water stored in the wick 256 is evaporated at low pressure using a low grade energy source. This water travels downwards into the adsorbent section 253, where an exothermic hydration reaction takes place to liberate heat. The hydration reaction reduces the water vapour pressure in the adsorption heat pipe 251, thereby causing more water to evaporate from the wick 256.

The adsorbent stack 259 comprises a plurality of layers of adsorbent material separated by discs made of sintered copper or foam copper. The discs could have any shape, they need not be round and they could be made from materials other than sintered copper or foam copper. Advantageously, it has been found that the use of an adsorbent stack allows the water vapour to be distributed more evenly throughout the adsorbent material. Accordingly, the efficiency of the adsorption heat pipe 251 may be improved.

The temperature of the vacuum tubes 255, 258 is controlled by water jackets in the vacuum tubes 255, 258. The temperature of the water in the water jackets will depend on whether charging or discharging is taking place. Diverter valves (not shown) may be used to direct heat through the water jackets from hot and cold sources (not shown).

By removing the base plate 2511, the adsorbent stack 259 may be unloaded from the vacuum tube 258. A new adsorbent stack 259 may then be loaded into the vacuum tube 258 to replace the previous adsorbent stack 259. Advantageously, the adsorbent stack 259 may be replaced without disassembling the adsorption heat pipe 251. The removable base plate 2511 is just one example of a suitable access means configured to allow removal and/or replacement of the adsorbent material, e.g. within an adsorbent stack 259, without disassembling the adsorption heat pipe 251.

A vacuum outlet (not shown) may be provided, so that, in use, the vacuum within the absorption heat pipe 251 can be maintained and/or varied.

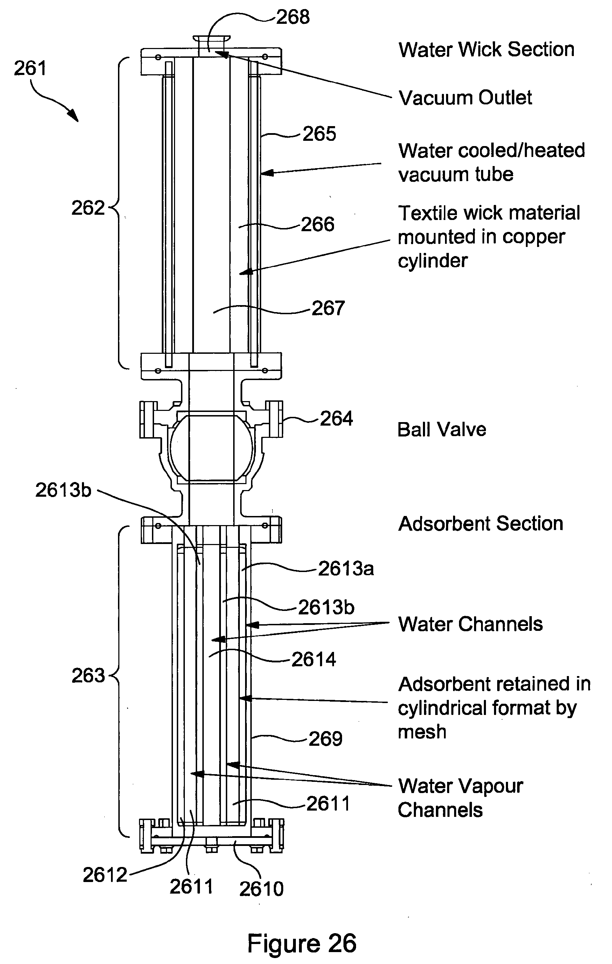

An example embodiment of an adsorption heat pipe 261 is shown in Figure 26. The adsorption heat pipe 261 comprises an evaporation section 262 and an adsorption section 263 with a ball valve 264 between the evaporation section 262 and the adsorption section 263. When the ball valve 264 is open there is fluid communication between the evaporation section 262 and the adsorption section 263.

The evaporation section 262 comprises a water cooled/heated vacuum tube 265. Within the vacuum tube 265, which is made of copper, there is a mounted a wick 266, inside which is a vapour flow channel 267. In this example, the wick 266 comprises a textile wick material. The top of the vacuum tube 265 is provided with a vacuum outlet 268.

The adsorption section 263 comprises a vacuum tube 269, typically made of copper. Moving radially inwards, the vacuum tube 269 comprises: an annular water channel 2612; a first tubular adsorbent body 2613a; an annular water vapour channel 2611; a second tubular adsorbent body 2613b; and a central water channel 2614.

The first tubular adsorbent body 2613a and the second tubular adsorbent body 2613b each comprise an adsorbent material retained within a mesh.

Providing the adsorbent material within one or more tubular bodies having a perforated or permeable outer wall or membrane, e.g. a mesh, has been found to be a beneficial and convenient way to arrange the adsorbent material within the adsorption section, since the efficiency of the adsorption heat pipe consequently may be improved. Any number of tubular bodies comprising the adsorbent material may be arranged, e.g. co-axially, within the adsorption section. Each tubular adsorbent body may be made from a plurality of bodies, e.g. two semitubular bodies.

Alternatively or additionally, one or more non-tubular bodies, e.g. cylinders or rods, comprising the adsorbent material(s) may be employed. The bodies (whether tubular or non-tubular) comprising the adsorbent material(s) may, in some embodiments, have a perforated or permeable outer wall or membrane, e.g. a mesh.

The vacuum tube 268 is also provided with a removable base plate 2611.

Typically, the working fluid may be water. The heat pipe 261 is evacuated, thereby reducing the boiling point of the water within it. During charging, heat (45 °C) is applied to the adsorbent material. This causes the hydrated adsorbent material to dissociate, thereby liberating water vapour, which is then condensed and stored in the wick 266. During discharging, water stored in the wick 266 is evaporated at low pressure using a low grade energy source. This water travels downwards into the adsorbent section 263, where an exothermic hydration reaction takes place to liberate heat. The hydration reaction reduces the water vapour pressure in the adsorption heat pipe 261, thereby causing more water to evaporate from the wick 266.

The temperature of the vacuum tubes 265, 269 is controlled by water jackets and channels in the vacuum tubes 265, 269. The temperature of the water in the water jackets will depend on whether charging or discharging is taking place. Diverter valves (not shown) may be used to direct heat through the water jackets from hot and cold sources (not shown).

By removing the base plate 2610, the tubular adsorbent bodies 2613a, 2613b or parts thereof may be unloaded from the vacuum tube 268. A new tubular adsorbent body 2613a, 2613b or part thereof may then be loaded into the vacuum tube 268 to replace the previous tubular adsorbent body 2613a, 2613b or part thereof. Advantageously, the or each tubular adsorbent body 2613a, 2613b may be replaced without disassembling the adsorption heat pipe 261. The removable base plate 2610 is just one example of a suitable access means configured to allow removal and/or replacement of the adsorbent material, e.g. within a tubular adsorbent body, without disassembling the adsorption heat pipe 261.

The vacuum outlet 268 is provided, so that, in use, the vacuum within the adsorption heat pipe 261 can be maintained and/or varied.

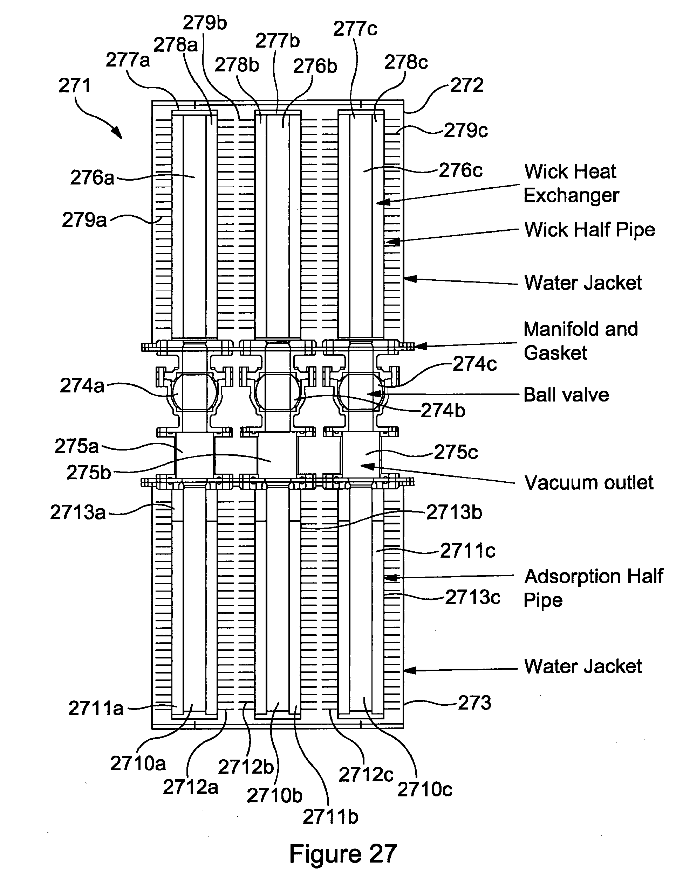

Figure 27 shows an example embodiment of a thermochemical energy storage system 271 according to the invention. As shown in Figure 27, the system 271 comprises three adsorption heat pipes, although it will be appreciated that the system could comprise any number of adsorption heat pipes. Systems according to the invention can be scaled for different applications and/or sites of use.

The system 271 comprises an upper casing 272, in which are located evaporation sections 277a, 277b, 277c of three adsorption heat pipes. Each evaporation section 277a, 277b, 277c has the form of an evacuated tube. The outer wall of each evaporation section 277a, 277b, 277c is provided with heat exchange fins 279a, 279b, 279c. In use, the heat exchange fins 279a, 279b, 279c facilitate heat exchange between the evaporation sections 277a, 277b, 277c and water within a water jacket within the upper casing 272. Within each evacuated tube 277a, 277b, 277c, there is a wick 278a, 278b, 278c, inside which is a vapour flow channel 276a, 276b, 276c. The wick 278a, 278b, 278c may comprise sintered copper or foam copper or a textile wick material. The or each tube 277a, 277b, 277c may be made from any suitable heat conductive material, e.g. a metal such as copper, aluminium or a steel.

The system 271 further comprises a lower casing 273 containing adsorption sections 2713a, 2713b, 2713c of the three adsorption heat pipes. Each adsorption section 2713a, 2713b, 2713c has the form of an evacuated tube.

Each adsorption section 2713a, 2713b, 2713c is connected to a corresponding evaporation section 277a, 277b, 277c by a conduit. Between each adsorption section 2713a, 2713b, 2713c and its corresponding evaporation section 277a, 277b, 277c, there is located a vacuum outlet 275a, 275b, 275c and a ball valve 274a, 274b, 274c. The vacuum outlets 275a, 275b, 275c are provided, so that, in use, the vacuum within each adsorption heat pipe can be maintained and/or varied. When each of the ball valves 274a, 274b, 274c are open there is fluid communication between the associated adsorption section 2713a, 2713b, 2713c and its corresponding evaporation section 277a, 277b, 277c. The ball valves 274a, 274b, 274c may be independently operable to regulate fluid communication within their respective adsorption heat pipes.

The outer wall of each adsorption section 2713a, 2713b, 2713c is provided with heat exchange fins 2712a, 2712b, 2712c. In use, the heat exchange fins 2712a, 2712b, 2712c facilitate heat exchange between the adsorption sections 2713a, 2713b, 2713c and water within a water jacket within the lower casing 273. Within each evacuated tube 2713a, 2713b, 2713c, there is a vapour channel 2710a, 2710b, 2710c defined by a perforated or at least partially permeable wall, which may typically comprise a mesh. Adsorbent material is arranged within an annulus 2711a, 2711 b, 2711c around each vapour channel 2710a, 2710b, 2710c. As shown in Figure 27, the vapour channel 2710a, 2710b, 2710c may be located centrally within each evacuated tube 2713a, 2713b, 2713c. However, such a co-axial arrangement, while convenient, is not essential to the invention. More than one vapour channel may be provided within each evacuated tube.

A manifold connects the upper casing 272 and the lower casing 273. The manifold and gaskets also act to provide a fluid-tight, e.g. water-tight, seal for the water jackets within the upper casing 272 and the lower casing 273. The upper casing 272 and/or the lower casing 273 may be detachable from the manifold. Accordingly, maintenance of the system may be facilitated.

The heat pipes operate as described previously.

The provision of a perforated or at least permeable wall defining at least partially the vapour channel within the adsorption section of the or each heat pipe may facilitate better distribution of the water vapour within the adsorbent material. Accordingly, the efficiency of the adsorption heat pipe may be improved.

Conveniently, adsorbent material may be inserted and/or removed from the top of the adsorption sections. Access may be provided by detaching the lower casing from the manifold.

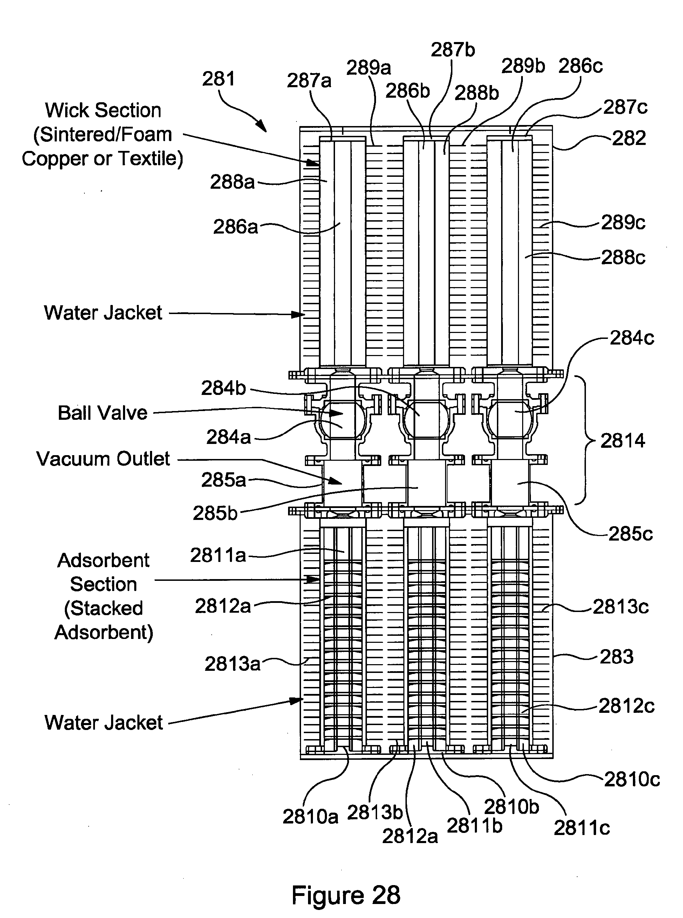

Figure 28 shows another example embodiment of a thermochemical energy storage system 281 according to the invention. The thermochemical energy storage system 281 is similar to the thermochemical energy storage system 271 shown in Figure 27 and discussed above. As shown in Figure 28, the system 281 comprises three adsorption heat pipes, although it will be appreciated that the system could comprise any number of adsorption heat pipes. Systems according to the invention can be scaled for different applications and/or sites of use.

The system 281 comprises an upper casing 282, in which are located evaporation sections 287a, 287b, 287c of three adsorption heat pipes. Each evaporation section 287a, 287b, 287c has the form of an evacuated copper tube. The outer wall of each evaporation section 287a, 287b, 287c is provided with heat exchange fins 289a, 289b, 289c. In use, the heat exchange fins 289a, 289b, 289c facilitate heat exchange between the evaporation sections 287a, 287b, 287c and water within a water jacket within the upper casing 282. Within each evacuated tube 287a, 287b, 287c, there is a wick 288a, 288b, 288c, inside which is arranged a vapour flow channel 286a, 286b, 286c. The wick 288a, 288b, 288c may comprise sintered copper or foam copper or a textile wick material. The or each tube 287a, 287b, 288c may be made from any suitable heat conductive material, e.g. a metal such as copper, aluminium or a steel.

The system 281 further comprises a lower casing 283 containing adsorption sections 2810a, 2810b, 2810c of the three adsorption heat pipes. Each adsorption section 2810a, 2810b, 2810c has the form of an evacuated tube.

The lower casing 283 is connected to the upper casing 282 by a manifold 2814.

Each adsorption section 2810a, 2810b, 2810c is connected to a corresponding evaporation section 287a, 287b, 287c by a conduit passing through the manifold 2814. Between each adsorption section 2810a, 2810b, 2810c and its corresponding evaporation section 287a, 287b, 287c, there is located a vacuum outlet 285a, 285b, 285c and a ball valve 284a, 284b, 284c. The vacuum outlets 285a, 285b, 285c are provided, so that, in use, the vacuum within each adsorption heat pipe can be maintained and/or varied. When each of the ball valves 284a, 284b, 284c is open there is fluid communication between the associated adsorption section 2810a, 2810b, 2810c and its corresponding evaporation section 287a, 287b, 287c. The ball valves 284a, 284b, 284c may be independently operable to regulate fluid communication within their respective adsorption heat pipes.

The manifold 2814 connects the upper casing 282 and the lower casing 283. The manifold 2814 and gaskets also act to provide a fluid-tight, e.g. water-tight, seal for the water jackets within the upper casing 282 and the lower casing 283. The upper casing 282 and/or the lower casing 283 may be detachable from the manifold. Accordingly, maintenance of the system 281 may be facilitated.

The outer wall of each adsorption section 2810a, 2810b, 2810c is provided with heat exchange fins 2813a, 2813b, 2813c. In use, the heat exchange fins 2813a, 2813b, 2813c facilitate heat exchange between the adsorption sections 2810a, 2810b, 2810c and water within a water jacket within the lower casing 283. Within each evacuated tube 2810a, 2810b, 2810c, there is a vapour channel 2811a, 2811b, 2811c defined by a a tubular cartridge 2812a, 2812b, 2812c, which tubular cartridges 2812a, 2812b, 2812c comprise the adsorbent material. As shown in Figure 28, the vapour channel 2811a, 2811b, 2811c may be located centrally within each evacuated tube 2810a, 2810b, 2810c. However, such a co-axial arrangement, while convenient, is not essential to the invention. Equally, the or each cartridge 2812a, 2812b, 2812c may not be tubular. More than one vapour channel may be provided within each evacuated tube 2810a, 2810b, 2810c.

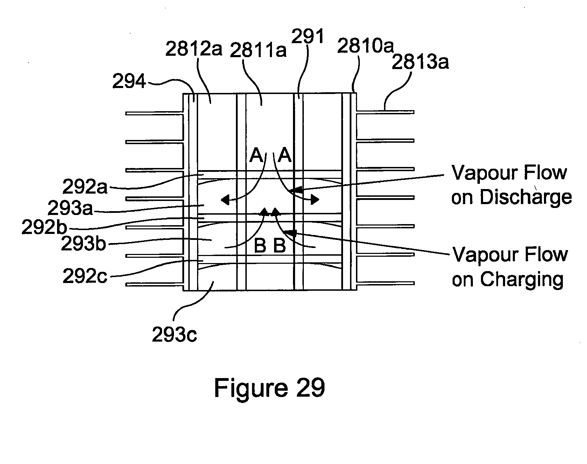

The or each cartridge may comprise a stack of a plurality of layers of adsorbent material separated by discs of a non-adsorbent material, e.g. sintered copper or foam copper. By way of further illustration, a portion of the cartridge 2812a is shown in more detail in Figure 29. The cartridge 2812a is shown within the evacuated tube 2810a. The cartridge 2812a comprises a central perforated or permeable tube 291 within an outer tube 294. The outer tube 294 is made from a thermally conductive material such as copper, e.g. sintered or foam copper. Between the outer tube 294 and the inner central tube 291 there is arranged a stack of layers of adsorbent material 293a, 293b, 293c separated by non-adsorbent layers 292a, 292b, 292c. The non-adsorbent layers 292a, 292b, 292c may comprise discs made from sintered copper or foam copper. It is not essential that the cartridge comprises both the central tube and the outer tube. One tube or the other may not be required. The important feature is that the cartridge comprises a unitary body comprising the adsorbent stack, which is configured to be received within an evacuated tube of the adsorption section of a heat pipe. A given cartridge or adsorbent stack may comprise any number of layers of adsorbent material. Different layers of the adsorbent stack may comprise different adsorbent materials.

The heat pipes operate as described previously. Referring to Figure 29, vapour flow during discharging is indicated by the arrows A and vapour flow during charging is indicated by the arrows B.

The provision of a perforated or at least permeable wall defining at least partially the vapour channel (e.g. the central tube 291 of the cartridge 2812a) within the adsorption section of the or each heat pipe may facilitate better distribution of the water vapour within the adsorbent material. Accordingly, the efficiency of the adsorption heat pipe may be improved.

Conveniently, the or each cartridge comprising the adsorbent material may be inserted and/or removed from the top of the adsorption sections. Access may be provided by detaching the lower casing 283 from the manifold 2814.

Alternatively or additionally, the adsorption sections may be configured such that the cartridge(s) may be inserted and/or removed from either end.

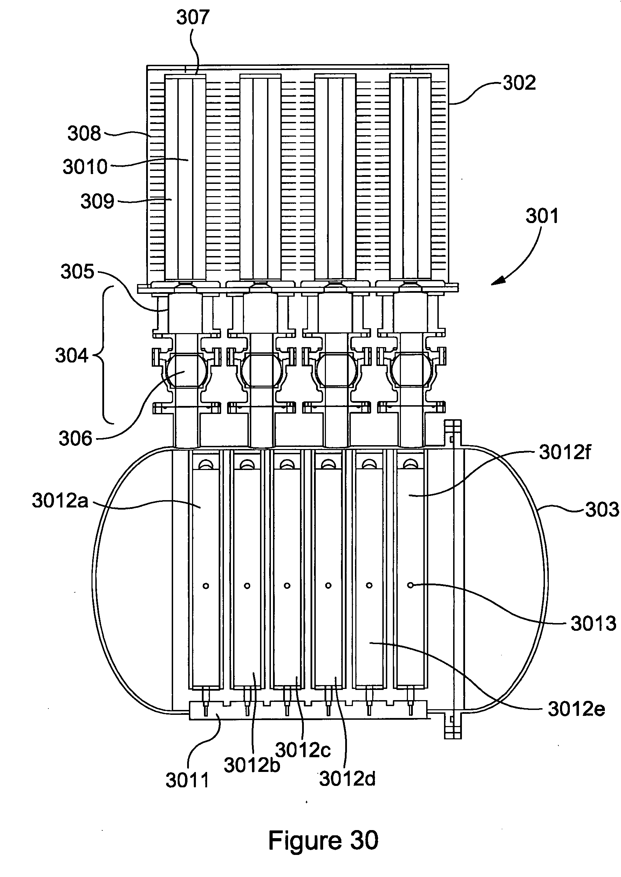

Figure 30 shows another example embodiment of a thermochemical energy storage system 301 according to the invention.

The system 301 comprises an evaporation section 302, which houses four evacuated tubes, substantially as described previously in relation to the embodiments shown in Figure 27 and Figure 28 at least. The features of only one of the evacuated tubes 307 are labelled for clarity. It will be understood that the evaporation section 302 may comprise any number of evacuated tubes 307. Each evacuated tube 307 comprises a vapour channel 3010 surrounded by a wick 309. The outer wall of the evacuated tube 307 is provided with a plurality of heat exchange fins 308. The evacuated tubes are surrounded by a water jacket.

The reactor section of the system 301 is housed within a vacuum vessel or tank 303. The vacuum vessel or tank 303 is connected to the evaporation section 302 by a manifold 304 comprising four conduits, each conduit being provided with a ball walve 306 and a vacuum outlet 305.

Within the vacuum vessel or tank 303, six adsorbent modules 3012a, 3102b, 3012c, 3012d, 3012e, 3012f are arranged in parallel on a support 3011. A meandering tube 3013 passes through the adsorbent modules 3012a, 3102b, 3012c, 3012d, 3012e, 3012f carrying, in use, hot or cold water depending on whether the system is charging or discharging.

The adsorbent modules 3012a, 3102b, 3012c, 3012d, 3012e, 3012f have integral water pipe heat exchangers, e.g. the meandering tube 3013. Within each adsorbent module 3012a, 3102b, 3012c, 3012d, 3012e, 3012f, the adsorbent material is contained in a sintered or foamed copper can.

During charging, water (e.g. at around 45°C) is fed through the water pipes in the adsorbent modules which will convert any hydrated adsorbent to the anhydrous form and water vapour. The water vapour is condensed in the evaporation/wick sections where cold water (e.g. at around 3°C) flows in the water jacket.

During discharging, a low grade heat source heats water in the water jacket of the evaporation section 302. Cold water is fed through the water pipes in the adsorbent modules allowing water vapour to condense in the adsorbent modules 3012a, 3102b, 3012c, 3012d, 3012e, 3012f. This will promote a hydration (exothermic) reaction. The heat produced will be transferred to the water flowing through the water pipes in the adsorbent modules.

Advantageously, the use of a vacuum vessel or tank may allow a larger amount of adsorbent material to be contained within the system.

It will be appreciated that, in a system according to the invention, there do not need to be the same number of reactor sections and condenser/evaporator refrigerant sections.

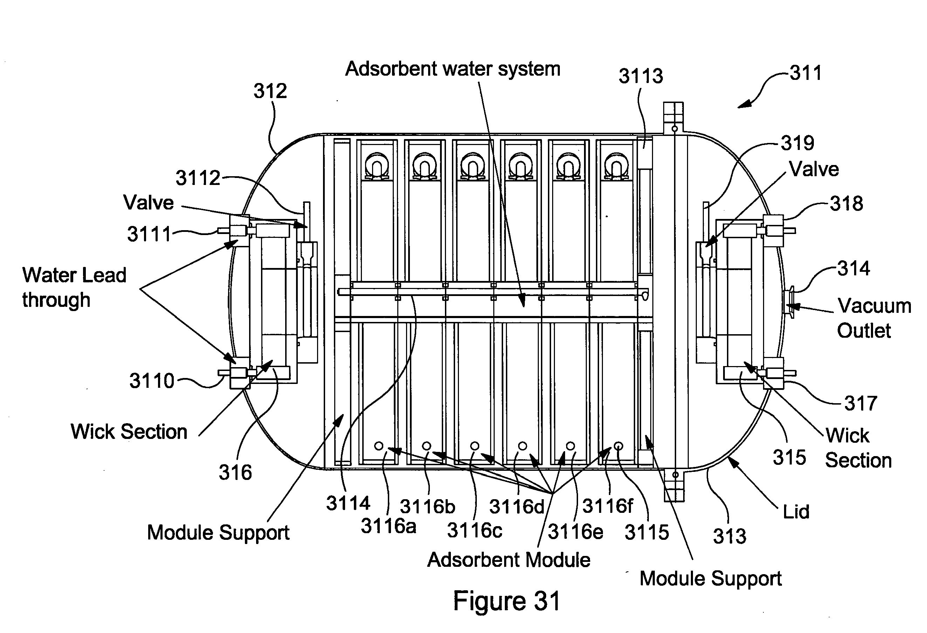

Figure 31 illustrates another example embodiment of a thermochemical energy storage system 311 according to the present invention. The system 311 is contained within a vacuum vessel or tank 312. Containing the system within a single vacuum vessel or tank may save space at a site of use.

The tank 312 is cylindrical with two domed ends. One of the domed ends comprises a lid 313, which can be opened to provide access to the inside of the tank 312. The lid 313 is provided with a vacuum outlet 314.

Within each domed end of the tank 312 there is an evaporation section 315, 316 comprising a wick. The first evaporation section 315 is located within the dome of the lid 313 and is provided with an associated water inlet 317 and an associated water outlet 318. The second evaporation section 316 is located within the dome opposite the lid 313 and is provided with an associated water inlet 3110 and an associated water outlet 3111. Between the two evaporation sections 315, 316, there is a reactor section comprising, in this example embodiment, six adsorbent modules 3116a, 3116b, 3116c, 3116d, 3116e, 3116f arranged on a module support 3113. A heat exchange tube 3114 extends across the adsorbent modules 3116a, 3116b, 3116c, 3116d, 3116e, 3116f and along the module support 3113. Another heat exchange tube having the form of a meandering tube 3115 passes through the adsorbent modules 3116a, 3116b, 3116c, 3116d, 3116e, 3116f. Fluid communication between the evaporation sections 315, 316 and the reactor section therebetween is controlled by valves 319, 3112. The valves may be butterfly valves, ball valves or any other suitable type of valve. A semi-permeable membrane may be employed instead of the valves 319, 3112. Replacement of the valves with a semi-permeable membrane could reduce the cost of the system.

In this example embodiment, the pipe system is completely housed in a vacuum vessel (i.e. tank 312), in order to optimise water vapour transfer from the wick sections to the adsorbent section and vice versa. Water cooling and heating circuits are piped in through the walls of the tank.

The design of this embodiment of the invention is modular. Discrete adsorbent modules and evaporation sections are employed. Once the vessel or tank size for a particular application has been determined, the most efficient arrangement of adsorbent modules and evaporation sections may be selected.

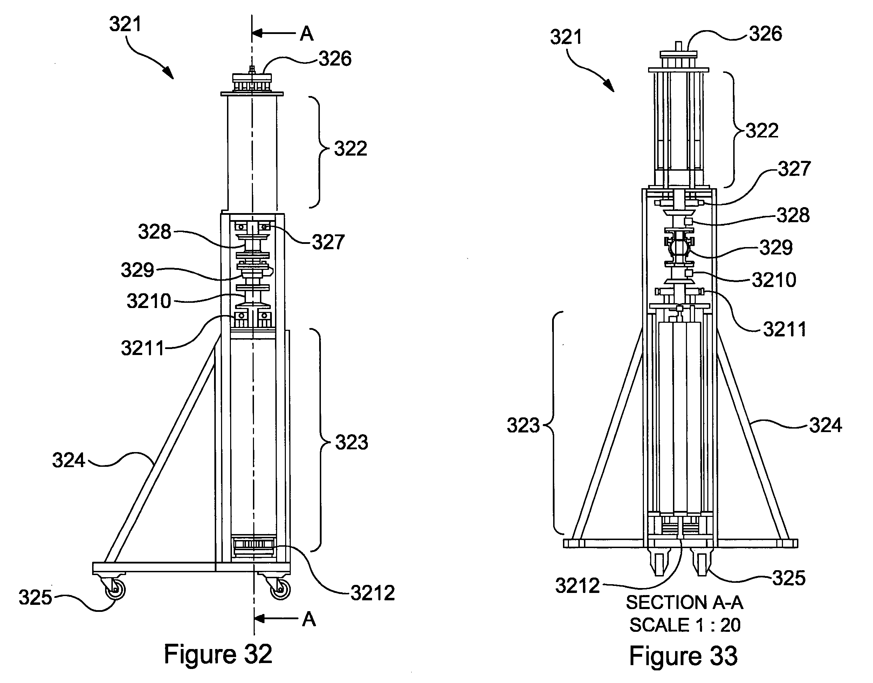

Figures 32 and 33 show another example embodiment of a thermochemical energy storage system 321 according to the present invention. Figure 33 is a cross-section along line A-A in Figure 32.

In this embodiment, an evaporation section 322 is mounted above an adsorption section 323. The evaporation section 322 is connected to the adsorption section 323 through a ball valve 329 and two vacuum inlets 328, 3210 (to enable each section to be evacuated independently). The system 321 is mounted on a support frame 324, which is provided with casters 325. The provision of wheels or casters allows the system 321 to more easily be moved from one location to another.

There is a water inlet 327 at the bottom of the evaporation section 322 and a water outlet 326 at the top of the evaporation section 322. There is a water inlet 3212 at the bottom of the adsorption section 323 and a water outlet 3211 at the top of the adsorption section.

The evaporation section 322 may contain a wick made from any suitable wicking material, e.g. a textile such as cotton or a foam that stores water.

Within the adsorption section, one or more adsorption modules, which may be tubular, e.g. with a circular or hexagonal cross-section, are arranged adjacent, e.g. around, one or more heat exchange pipes. Vapour channels within the adsorption modules allow the transfer of water vapour to/from the adsorbent material.

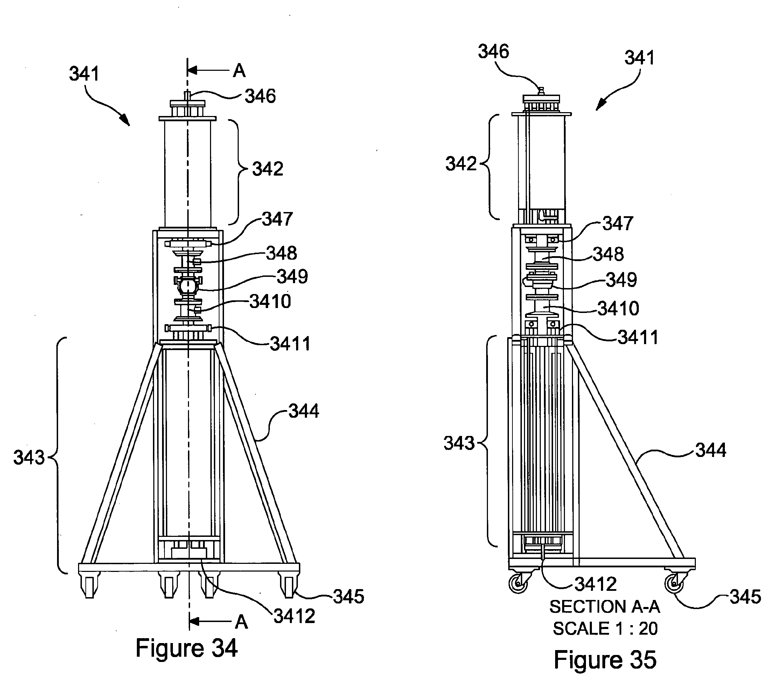

Figures 34 and 35 show another example embodiment of a thermochemical energy storage system 341 according to the present invention. Figure 35 is a cross-section along line A-A in Figure 34.

In this embodiment, an evaporation section 342 is mounted above an adsorption section 343. The evaporation section 342 is connected to the adsorption section 343 through a ball valve 349 and two vacuum inlets 348, 3410 (to enable each section to be evacuated independently). The system 341 is mounted on a support frame 344, which is provided with casters 345. The provision of wheels or casters allows the system 341 to more easily be moved from one location to another.

There is a water inlet 347 at the bottom of the evaporation section 342 and a water outlet 346 at the top of the evaporation section 342. There is a water inlet 3412 at the bottom of the adsorption section 343 and a water outlet 3411 at the top of the adsorption section 343.

The evaporation section 342 may contain a wick made from any suitable wicking material, e.g. a textile such as cotton or a foam that stores water.

Within the adsorption section, there are no discrete adsorption modules. Instead the casing of adsorption section 343 is packed directly with adsorbent material. In this way, the system may for a given system size contain a larger amount of adsorbent material. One or more perforated or permeable tubes (e.g. mesh tubes) are used to provide channels for water vapour to reach the adsorbent material. One or more heat exchange tubes pass through the adsorption section 343, supplied with hot or cold water from the inlet 3412, which water then exits the adsorption section 343 following heat exchange within the adsorption section via the water outlet 3411.

While specific example embodiments of the invention have been described, it will be appreciated that features from different embodiments may be combined without departing from the scope of the invention. For instance, a thermochemical energy storage system according to the invention may be assembled by combining any of the evaporation sections disclosed herein with any of the adsorption sections disclosed herein.

**Claims**

1. A thermochemical energy storage system (170) operable to store energy for future use comprising:

   an energy storage unit (1600) comprising at least one adsorption heat pipe (150) having an operating temperature of no more than 80°C, the adsorption heat pipe comprising a reactor section (152/1602) comprising an adsorbent (155, 1605) containing a thermochemical material and a condenser/evaporator refrigerant section (151, 1601), the adsorption heat pipe containing a working fluid (161,1610) selected to match the operating temperature of the adsorption heat pipe; **characterised by** a heat pump coupled to a heat source and operable to transfer heat from the heat source to the energy storage unit; and

   wherein, in use, the heat pump is operated periodically using a high grade energy source for one or more charging periods, whereby heat is transferred during the one or more charging periods to the energy storage unit, where the heat is stored for future use by being absorbed in the course of desorption of the working fluid from the adsorbent.

2. A thermochemical energy storage system according to claim 1, wherein the thermochemical material comprises lithium nitrate ($LiNO_3$) and/or calcium chloride ($CaCl_2$) and/or calcium hydroxide ($Ca(OH)_2$) and/or calcium nitrate ($Ca(NO_3)_2$) and/or silica gel and/or a zeolite.

3. A thermochemical energy storage system according to claim 1 or claim 2, wherein the adsorbent comprises a composite adsorbent containing the thermochemical material.

4. A thermochemical energy storage system according to claim 3, wherein the composite adsorbent comprises a host matrix, the host matrix optionally comprising silica and/or vermiculite.

5. A thermochemical energy storage system according to any one of the preceding claims, wherein the working fluid is water, ammonia or an alcohol such as methanol or ethanol.

6. A thermochemical energy storage system according to any one of the preceding claims, wherein the condenser/evaporator refrigerant section contains a wick.

7. A thermochemical energy storage system according to any one of the preceding claims, wherein the thermochemical material is provided in an adsorbent bed or the thermochemical material is provided in an adsorbent stack comprising a plurality of layers of adsorbent separated by layers of non-adsorbent material and/or the thermochemical material is provided in a discrete module or cartridge.

8. A thermochemical energy storage system according to any one of the preceding claims comprising one or more vapour flow channels in the reactor section passing through or adjacent the adsorbent.

9. A thermochemical energy storage system according to claim 8 wherein the one or more vapour flow channels is/are defined at least partially by a permeable or perforated wall or membrane, e.g. a mesh.

10. A thermochemical energy storage system according to any one of the preceding claims, wherein the system is mounted on wheels or casters.

**11.** A thermochemical energy storage system according to any one of the preceding claims, wherein the high grade energy source comprises off-peak electricity and/or electricity generated from a renewable source such as wind or solar.

**12.** A thermochemical energy storage system according to any one of the preceding claims, wherein the heat source is the ground or ambient air and/or the heat pump comprises a thermoelectric heat pump or the heat pump comprises a vapour compression heat pump.

**13.** A property with at least one building on the property, wherein a thermochemical energy strorage system according to any one of claims 1 to 12 is installed at the property.

**14.** Use of a system according to any one of claims 1 to 12 to store energy during one or more charging periods and subsequently release the stored energy during one or more discharging periods.

**Patentansprüche**

**1.** Ein thermochemisches Energiespeicherungssystem (170), das Energie für die zukünftige Nutzung speichern kann und Folgendes aufweist:

eine Energiespeicherungseinheit (1600), die mindestens ein Adsorptionswärmerohr (150) mit einer Betriebstemperatur von nicht mehr als 80°C aufweist, das Adsorptionswärmerohr weist dabei einen Reaktorabschnitt (152/1602) auf, der wiederum ein Adsorptionsmittel (155, 1605) aufweist, das ein thermochemisches Material und einen Kondensator-/Verdampfer-Kältemittelabschnitt (151, 1601) enthält, das Adsorptionswärmerohr enthält dabei ein Arbeitsmittel (161,1610), das so ausgewählt ist, dass es mit der Betriebstemperatur des Adsorptionswärmerohrs übereinstimmt; **gekennzeichnet durch**
eine Wärmepumpe, die mit einer Wärmequelle gekoppelt ist und die Wärme von der Wärmequelle zur Energiespeicherungseinheit übertragen kann; und
wobei im Betrieb die Wärmepumpe regelmäßig eingesetzt wird, unter Verwendung einer hochwertigen Energiequelle für eine oder mehrere Ladeperioden, wobei die Wärme während der einen oder mehreren Ladeperioden an die Energiespeicherungseinheit übertragen wird, wo die Wärme für die zukünftige Nutzung gespeichert wird, indem sie im Laufe der Desorption des Arbeitsmittels aus dem Adsorptionsmittel absorbiert wird.

**2.** Ein thermochemisches Energiespeicherungssystem gemäß Anspruch 1, wobei das thermochemische Material Lithiumnitrat ($LiNO_3$) und/oder Calciumchlorid ($CaCl_2$) und/oder Calciumhydroxid ($Ca(OH)_2$) und/oder Calciumnitrat ($Ca(NO_3)_2$ und/oder Kieselgel und/oder ein Zeolith aufweist.

**3.** Ein thermochemisches Energiespeicherungssystem gemäß Anspruch 1 oder Anspruch 2, wobei das Adsorptionsmittel ein Komposit-Adsorptionsmittel aufweist, das das thermochemische Material enthält.

**4.** Ein thermochemisches Energiespeicherungssystem gemäß Anspruch 3, wobei das Komposit-Adsorptionsmittel eine Wirtsmatrix aufweist, die Wirtsmatrix weist dabei optional Kieselsäure und/oder Vermiculit auf.

**5.** Ein thermochemisches Energiespeicherungssystem gemäß eines der vorhergehenden Ansprüche, wobei das Arbeitsmittel Wasser, Ammoniak oder ein Alkohol ist, wie Methanol oder Ethanol.

**6.** Ein thermochemisches Energiespeicherungssystem gemäß eines der vorhergehenden Ansprüche, wobei der Kondensator-/Verdampfer-Kältemittelabschnitt einen Docht enthält.

**7.** Ein thermochemisches Energiespeicherungssystem gemäß eines der vorhergehenden Ansprüche, wobei das thermochemische Material in einem Adsorptionsmittelbett bereitgestellt wird oder das thermochemische Material in einem Adsorptionsmittelstapel bereitgestellt wird, der eine Vielzahl von Schichten des Adsorptionsmittels aufweist, die durch Schichten von Nicht-Adsorptionsmaterial getrennt sind, und/oder wobei das thermochemische Material in einem eigenständigen Modul oder einer Kartusche bereitgestellt wird.

**8.** Ein thermochemisches Energiespeicherungssystem gemäß eines der vorhergehenden Ansprüche, das einen oder mehrere Dampf-Strömungskanäle im Reaktorabschnitt aufweist, der durch das oder neben dem Adsorptionsmittel hindurch läuft.

9. Ein thermochemisches Energiespeicherungssystem gemäß Anspruch 8, wobei der eine oder die mehreren Dampf-Strömungskanäle mindestens teilweise definiert ist/sind durch eine durchlässige oder perforierte Wand oder Membran, z.B. ein Sieb.

10. Ein thermochemisches Energiespeicherungssystem gemäß eines der vorhergehenden Ansprüche, wobei das System auf Rädern oder Laufrollen montiert ist.

11. Ein thermochemisches Energiespeicherungssystem gemäß eines der vorhergehenden Ansprüche, wobei die hochwertige Energiequelle Nachtstrom und/oder Elektrizität aufweist, die aus erneuerbaren Energiequellen, wie Wind- oder Solaranlagen, erzeugt wird.

12. Ein thermochemisches Energiespeicherungssystem gemäß eines der vorhergehenden Ansprüche, wobei die Wärmequelle der Boden oder die Umgebungsluft ist und/oder wobei die Wärmepumpe eine thermoelektrische Wärmepumpe aufweist oder die Wärmepumpe eine Dampfkompressions-Wärmepumpe aufweist.

13. Ein Grundstück mit mindestens einem Gebäude auf dem Grundstück, wobei das thermochemische Energiespeicherungssystem gemäß eines der Ansprüche 1 bis 12 auf dem Grundstück installiert ist.

14. Die Verwendung eines Systems gemäß eines der Ansprüche 1 bis 12, um Energie während einer oder mehrerer Ladeperioden zu speichern und danach die gespeicherte Energie während einer oder mehrerer Entladeperioden wieder freizugeben.

**Revendications**

1. Un système de stockage d'énergie thermochimique (170) conçu de façon à stocker de l'énergie pour une utilisation future comprenant :

   une unité de stockage d'énergie (1600) comprenant au moins un tuyau de chaleur d'adsorption (150) possédant une température de fonctionnement ne dépassant pas 80°C, le tuyau de chaleur d'adsorption comprenant une section réacteur (152/1602) comprenant un adsorbant (155, 1605) contenant un matériau thermochimique et une section frigorigène à condensateur/évaporateur (151, 1601), le tuyau de chaleur d'adsorption contenant un fluide de travail (161, 1610) sélectionné de façon à correspondre à la température de fonctionnement du tuyau de chaleur d'adsorption, **caractérisé par**
   une pompe à chaleur couplée à une source de chaleur et conçue de façon à transférer de la chaleur de la source de chaleur vers l'unité de stockage d'énergie, et
   où, en utilisation, la pompe à chaleur est actionnée périodiquement au moyen d'une source d'énergie de haute qualité pendant une ou plusieurs périodes de charge, grâce à quoi de la chaleur est transférée au cours des une ou plusieurs périodes de charge vers l'unité de stockage d'énergie, où la chaleur est stockée pour une utilisation future en étant absorbée au cours de la désorption du fluide de travail de l'adsorbant.

2. Un système de stockage d'énergie thermochimique selon la Revendication 1, où le matériau thermochimique contient du nitrate de lithium ($LiNO_3$) et/ou du chlorure de calcium ($CaCl_2$) et/ou de l'hydroxyde de calcium ($Ca(OH)_2$) et/ou du nitrate de calcium ($Ca(NO_3)_2$) et/ou du gel de silice et/ou une zéolite.

3. Un système de stockage d'énergie thermochimique selon la Revendication 1 ou 2, où l'adsorbant contient un adsorbant composite contenant le matériau thermochimique.

4. Un système de stockage d'énergie thermochimique selon la Revendication 3, où l'adsorbant composite contient une matrice hôte, la matrice hôte contenant éventuellement de la silice et/ou de la vermiculite.

5. Un système de stockage d'énergie thermochimique selon l'une quelconque des Revendications précédentes, où le fluide de travail est de l'eau, de l'ammoniac ou un alcool tel que méthanol ou éthanol.

6. Un système de stockage d'énergie thermochimique selon l'une quelconque des Revendications précédentes, où la section frigorigène à condensateur/évaporateur contient une mèche.

7. Un système de stockage d'énergie thermochimique selon l'une quelconque des Revendications précédentes, où le matériau thermochimique est placé dans un lit d'adsorbant ou le matériau thermochimique est placé dans une pile d'adsorbant comprenant une pluralité de couches d'adsorbant séparées par des couches de matériau non adsorbant et/ou le matériau thermochimique est placé dans un module ou une cartouche discrète.

8. Un système de stockage d'énergie thermochimique selon l'une quelconque des Revendications précédentes comprenant un ou plusieurs canaux d'écoulement de vapeur dans la section réacteur passant au travers de ou adjacents à l'adsorbant.

9. Un système de stockage d'énergie thermochimique selon la Revendication 8 où les un ou plusieurs canaux d'écoulement de vapeur sont définis au moins partiellement par une paroi ou une membrane perméable ou perforée, par exemple un treillis.

10. Un système de stockage d'énergie thermochimique selon l'une quelconque des Revendications précédentes, où le système est monté sur des roues ou des roulettes.

11. Un système de stockage d'énergie thermochimique selon l'une quelconque des Revendications précédentes, où la source d'énergie de haute qualité comprend de l'électricité hors pointe et/ou de l'électricité générée à partir d'une source renouvelable telle que vent ou énergie solaire.

12. Un système de stockage d'énergie thermochimique selon l'une quelconque des Revendications précédentes, où la source de chaleur est le sol ou l'air ambiant et/ou la pompe à chaleur comprend une pompe à chaleur thermoélectrique ou la pompe à chaleur comprend une pompe à chaleur à compression de vapeur.

13. Une propriété avec au moins un bâtiment sur la propriété, où un système de stockage d'énergie thermochimique selon l'une quelconque des Revendications 1 à 12 est installé dans la propriété.

14. L'utilisation d'un système selon l'une quelconque des Revendications 1 à 12 destiné au stockage d'énergie au cours d'une ou de plusieurs périodes de charge et subséquemment à la libération de l'énergie stockée au cours d'une ou de plusieurs périodes de décharge.

Figure 1

Figure 2

Figure 3

Figure 4

Figure 5

Figure 6

71

72

Figure 7

Figure 8

Figure 9

## LiNO3/Water

Figure 10

## 50% LiNO3 + 50% Zeolite/Water

Figure 11

Figure 12

Figure 13

Figure 14

Figure 15

Figure 16

Figure 17

Figure 18

1910  1909
1907                    1900        1908

T5                                  Chilled water return
                                    (for measurement)/
1906                                Heat out (for regeneration)
1905
                1903
        1904        1902  1901

                                    Chilled water supply
                                    (for measurement)/
                                    Heat in (for regeneration)
1911  1905          1912
            1913    Heat source/low
T2                  grade energy return
1918                        Electric supply
1919            1917            1914
                            1915
1920  1922                  1916
        1923
1921    1924  1925
T1                  Heat source/low
                    grade energy
                    supply
        1926

Figure 19

Figure 20

Figure 21

Figure 22

Figure 23

Figure 24

257  256

251

Water Wick Section

255

Water cooled/heated
vacuum tube

252

Sintered copper or
foam wick inside
copper tube.

254

Ball Valve

Adsorbent Section

258

Water cooled/heated
vacuum tube

253

Vapour delivery tube

259

Adsorbent stack

2511          2510

Figure 25

261

268

Water Wick Section

Vacuum Outlet

262

265

Water cooled/heated vacuum tube

266

Textile wick material mounted in copper cylinder

267

264

Ball Valve

2613b

Adsorbent Section

2613a

2613b

Water Channels

263

2614

Adsorbent retained in cylindrical format by mesh

269

Water Vapour Channels

2611

2612    2611    2610

Figure 26

Figure 27

Figure 28

Figure 29

Figure 30

Figure 31

EP 2 808 640 B1

SECTION A-A
SCALE 1 : 20
Figure 33

Figure 32

341

346

342

347
348
349
3410

3411

344

3412
345

SECTION A-A
SCALE 1 : 20

Figure 35

343

341

A
346

342

347

348
349
3410

3411

344

345
3412

A

343

Figure 34

EP 2 808 640 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 7871458 B

- US 4510759 A

### Non-patent literature cited in the description

- **Y. DING ; S. B. RIFFAT.** Thermochemical energy storage technologies for building applications: a state-of-the-art review. *Int. J. Low-Carbon Tech.,* 2012
- Sustainable solar housing: exemplary buildings and technologies. Earthscan. **R. HASTINGS ; M. WALL.** IEA Energy Conservation in Buildings & Community Systems Programme. 2007
- **K.E. N'TSOUKPOE et al.** A review on long-term sorption solar energy storage. *Renewable and Sustainable Energy Reviews,* 2009, vol. 13, 2385-2396
- **C. BALES.** Solar Energy Research Center (SERC). Chemical and sorption heat storage. *Proceedings of DANVAK seminar (solar heating systems - Combisystems - heat storage,* 2006
- **J.C. HADORN.** Thermal energy storage for solar and low energy buildings - state of the art. Servei de Publicacions de la Universitat de Lleida, 2005
- **KATO YUKITAKA et al.** Study on medium-temperature chemical heat storage using mixed hydroxides. *International Journal of Refrigeration,* 2009, vol. 32 (4), 661-666
- **VISSCHER, K. et al.** Compacte chemische seizoensopslag van zonnewarmte. *ECN-C-04-074,* 2004

- Characterisation of MgSO4 hydrate for thermochemical seasonal heat storage. **ESSEN VAN V. M. et al.** J. Solar Energy Eng.-Trans. ASME, 2009, vol. 131, 041014
- **POSERN, K. ; KAPS C.** Humidity controlled calorimetric investigation of the hydration of MgSO4 hydrates. *J. Therm. Anal. Calorim.,* 2008, vol. 92 (3), 905-909
- **H. STACH et al.** Influence of cycle temperatures on the thermochemical heat storage densities in the systems water/microporous and water/mesoporous adsorbents. *Adsorp.-J. Int. Adsorp. Soc.,* 2005, vol. 11 (3-4), 393-404
- **BALASUBRAMANIAN GANESH et al.** Modeling of thermochemical energy storage by salt hydrates. *International Journal of Heat and Mass Transfer,* 2010, vol. 53, 5700-5706
- **ABEDIN A.H. ; ROSEN M.A.** Assessment of a closed thermochemical energy storage using energy and exergy methods. *Applied Energy,* 2011
- **H. LAHMIDI et al.** Definition, test and simulation of a thermochemical storage process adapted to solar thermal systems. *Solar Energy,* 2006, vol. 80, 883-893